(19) Europäisches Patentamt
European Patent Office
Office européen des brevets

(11) EP 2 804 429 A1

(12) EUROPEAN PATENT APPLICATION

(43) Date of publication:
19.11.2014 Bulletin 2014/47

(51) Int Cl.:
H04W 52/02 (2009.01)

(21) Application number: 14166782.4

(22) Date of filing: 01.05.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 14.05.2013 KR 20130054638

(71) Applicant: Samsung Electronics Co., Ltd
Gyeonggi-do 443-742 (KR)

(72) Inventors:
• Kim, Sung-soo
Gyeonggi-do (KR)

• Kang, Hyuk
Gyeonggi-do (KR)
• Lee, Geun-ho
Gyeonggi-do (KR)
• Lee, Sang-hyup
Gyeonggi-do (KR)

(74) Representative: Davies, Robert Ean
Appleyard Lees
15 Clare Road
Halifax
Yorkshire HX1 2HY (GB)

(54) **Method of controlling communication unit via magnetic sensor and electronic device using the method**

(57) A method of controlling a communication unit of an electronic device is provided. The method includes: obtaining magnetic field information via a magnetic sensor; comparing the obtained magnetic field information with reference magnetic field information; and switching the communication unit in an inactive state to an active state based on a result of the comparing, wherein the communication unit is capable of communicating with an external device in the active state.

FIG. 1

**Description**

CROSS-REFERENCE TO RELATED PATENT APPLICATION

This application claims priority from Korean Patent Application No. 10-2013-0054638, filed on May 14, 2013, in the Korean Intellectual Property Office, the disclosure of which is incorporated herein in its entirety by reference.

BACKGROUND

1. Field

Apparatuses and methods consistent with exemplary embodiments relate to a method of controlling at least one communication unit in an inactive state based on magnetic field information obtained by a magnetic sensor, and an electronic device therefor.

2. Description of the Related Art

In general, a communication unit of an electronic device is activated in a stand-by mode, which may increase power consumption of the electronic device. However, when the communication unit is turned off to reduce power consumption, it is inconvenient for a user to manipulate the electronic device whenever the communication unit needs to be activated in the stand-by mode.
Therefore, to reduce stand-by power consumption in the communication unit of the electronic device, there is a demand for a system that allows the communication unit to stay in an inactive state in a normal condition and easily switches the communication unit to an active state when required.

SUMMARY

Exemplary embodiments may address at least the above problems and/or disadvantages and other disadvantages not described above. Also, the exemplary embodiments are not required to overcome the disadvantages described above, and an exemplary embodiment may not overcome any of the problems described above.
One or more exemplary embodiments provide a communication unit control method and an electronic device using the same in which an electronic device including a magnetic sensor and another electronic device including magnetic material are easily connected while reducing stand-by power of a communication unit of the electronic device.
According to an aspect of an exemplary embodiment, a method of controlling a communication unit of an electronic device includes: obtaining magnetic field information via a magnetic sensor; comparing the obtained magnetic field information with reference magnetic field information; and switching the communication unit in an inactive state to an active state based on a result of the comparing, wherein the communication unit is capable of communicating with an external device in the active state.
The switching may include switching the communication unit in the inactive state to the active state when the obtained magnetic field information is greater than or equal to the reference magnetic field information.
The communication unit control method may further include searching for the external device via the communication unit switched to the active state.
The searching may include receiving advertising information from the external device, wherein the advertising information may include at least one from among identification information, capability information, state information, and information about a preferred communication method of the external device.
The communication unit may include a microphone, and the searching may include receiving a sound signal, including advertising information, output from the external device via the microphone.
The communication unit control method may further include: detecting clipping of the sound signal; and controlling sensitivity of the microphone based on the clipping of the sound signal.
The communication unit control method may further include: obtaining a signal to noise ratio (SNR) of the sound signal; and controlling sensitivity of the microphone based on the SNR of the sound signal.
The communication unit control method may further include: obtaining relative location information of the external device with respect to the electronic device based on the obtained magnetic field information; and providing guide information for guiding movement of the microphone based on the relative location information of the external device.
The providing may include displaying at least one of location and/or direction information of the external device and location and/or direction information of the microphone on a screen of the electronic device.
The communication unit control method may further include providing information about sensitivity of the microphone.

The communication unit control method may further include providing a list of at least another communication unit for searching for the external device when the external device is not found as a result of the searching for the external device via the communication unit switched to the active state.

The communication unit may further include at least one short-range wireless communication unit, and the searching may include receiving advertising information from the external device via the at least one short-range wireless communication unit.

The switching may include: switching at least one communication unit in the inactive state to the active state based on priority of the at least one communication unit; and searching for the external device via the at least one communication unit switched to the active state.

The communication unit control method may include switching a plurality of communication unit to an active state, the switching including switching a first communication unit capable of communicating with an external device to an active state, searching for the external device via the first communication unit, and switching a second communication unit to an active state when the external device is not found.

The communication unit control method may further include providing an application related with the external device on a screen of the electronic device when the electronic device is connected with the external device via the communication unit.

According to an aspect of another exemplary embodiment, an electronic device includes: a communication unit capable of communicating with an external device; a sensing unit including a magnetic sensor configured to obtain magnetic field information; and a controller configured to compare the magnetic field information obtained by the magnetic sensor with reference magnetic field information and switch the communication unit in an inactive state to an active state based on a result of the comparing.

The controller of the electronic device may include a sensor hub connected to the sensing unit and configured to transmit, to an application processor, wakeup information for switching the application processor in a sleep mode to a wakeup mode.

The sensing unit of the electronic device may further include at least one from among a gyroscope sensor configured to obtain angular velocity information of the electronic device and an acceleration sensor configured to obtain acceleration information of the electronic device. The controller may switch the communication unit in the inactive state to the active state further based on at least one from among the angular velocity information and the acceleration information of the electronic device.

The communication unit of the electronic device may receive advertising information from the external device when switched to the active state , the advertising information including at least one from among identification information, capability information, state information, and information about a preferred communication method of the external device.

The communication unit of the electronic device may include a microphone configured to receive a sound signal, including advertising information, output from the external device when switched to the active state.

The controller of the electronic device may control sensitivity of the microphone based on at least one from among information about clipping occurrence in the sound signal and information about an SNR of the sound signal.

The electronic device may further include a display unit configured to display at least one of location and/or direction information of the external device and location and/or direction information of the microphone.

The communication unit may include at least one short-range wireless communication unit configured to receive advertising information from the external device when switched to the active state.

The short-range wireless communication unit may include at least one from among a WiFi communication unit, a Bluetooth communication unit, a Near Field Communication (NFC) unit, a Bluetooth Low Energy (BLE) communication unit, a ZigBee communication unit, an Infrared Data Association (IrDA) communication unit, a Wi-Fi Direct (WFD) communication unit, and an Ultra Wideband (UWB).

The controller may sequentially switch at least one communication unit in the inactive state to the active state based on priority of the at least one communication unit.

The electronic device may further include a display unit configured to display at least one from among information about a connection status to the external device, an application related with the external device, and the obtained magnetic field information, when the electronic device is connected with the external device via the communication unit.

According to an aspect of still another exemplary embodiment, an electronic device includes a magnetic sensor configured to sense magnetic field information; and a controller configured to control to activate or deactivate at least one communication mode of the electronic device based on the sensed magnetic field information.

According to an aspect of still another exemplary embodiment, an electronic device includes a processor configured to detect a location of an external device, wherein connection between the electronic device and the external device is performed based on the location of the external device with respect to the electronic device.

BRIEF DESCRIPTION OF THE DRAWINGS

For a better understanding of the invention, and to show how embodiments of the same may be carried into effect, reference will now be made, by way of example, to the accompanying diagrammatic drawings in which:

FIG. 1 is a diagram of a communication system according to an exemplary embodiment;
FIG. 2 is a flowchart of a communication unit control method according to an exemplary embodiment;
FIGS. 3 A, 3B, and 3C are diagrams for explaining magnetic field information according to exemplary embodiments;
FIGS. 4A, 4B, and 4C are diagrams for explaining information about a magnetic field intensity variation according to exemplary embodiments;
FIG. 5 is a diagram illustrating a feature vector obtained using a plurality of sensors according to an exemplary embodiment;
FIG. 6 is a diagram illustrating a support vector machine (SVM) method according to an exemplary embodiment;
FIGS. 7A, 7B, and 7C are diagrams illustrating a function for obtaining magnetic field information according to exemplary embodiments;
FIG. 8 is a flowchart of a method of searching for an external device according to an exemplary embodiment;
FIGS. 9A, 9B, 10A and 10B are diagrams illustrating exemplary embodiments where a microphone of an electronic device is switched to an active state;
FIGS. 11A, 11B, 12A and 12B are diagrams illustrating exemplary embodiments where a short-range wireless communication unit of an electronic device is switched to an active state;
FIG. 13 is a flowchart of a method by which an electronic device sequentially activates a plurality of communication units according to an exemplary embodiment;
FIG. 14 is a diagram illustrating an exemplary embodiment of sequentially activating a plurality of communication units;
FIG. 15 is a flowchart of a method of providing a list of communication units according to an exemplary embodiment;
FIGS. 16A and 16B are diagrams a list of communication units provided on an electronic device according to exemplary embodiments;
FIG. 17 is a diagram of a communication system according to another exemplary embodiment;
FIG. 18 is a diagram illustrating an exemplary embodiment where a communication unit in an inactivate state is switched to an active state when a wireless charging pad is detected;
FIG. 19 is a flowchart of a method of adjusting sensitivity of a microphone according to an exemplary embodiment;
FIGS. 20A, 20B, and 20C are diagrams for describing a state of a sound signal with respect to sensitivity of a microphone according to exemplary embodiments;
FIG. 21 is a flowchart of a method by which an electronic device guides a user to a location of an external device or a microphone according to an exemplary embodiment;
FIGS. 22A and 22B are diagrams of a method by which an electronic device detects a location of an external device based on magnetic field information according to exemplary embodiments;
FIGS. 23A, 23B and 23C are diagrams for describing a method by which an electronic device detects a location of an external device based on magnetic field information and angular velocity information according to exemplary embodiments;
FIGS. 24A, 24B, and 24C are diagrams illustrating guiding a user to move a location of a microphone of an electronic device according to exemplary embodiments;
FIG. 25 is a block diagram illustrating a structure of an electronic device according to an exemplary embodiment; and
FIG. 26 is a diagram illustrating a data communication protocol of a seamless sensing platform (SSP) according to an exemplary embodiment.

DETAILED DESCRIPTION

Terms used herein will be briefly described and certain exemplary embodiments are described in greater detail below with reference to the accompanying drawings.

As used herein, the term "and/or" includes any and all combinations of one or more of the associated listed items. Expressions such as "at least one of," when preceding a list of elements, modify the entire list of elements and do not modify the individual elements of the list.

General and widely-used terms have been employed herein, in consideration of functions provided in the present disclosure, and may vary according to an intention of one of ordinary skill in the art, a precedent, or emergence of new technologies. Additionally, in some cases, an applicant may arbitrarily select specific terms. Then, the applicant will provide the meaning of the terms in the description of the present disclosure. Accordingly, It will be understood that the terms, used herein, should be interpreted as having a meaning that is consistent with their meaning in the context of the relevant art and will not be interpreted in an idealized or overly formal sense unless expressly so defined herein.

It will be further understood that the terms "comprises", "comprising", "includes", and/or "including" when used herein, specify the presence of components, but do not preclude the presence or addition of one or more other components, unless otherwise specified. Additionally, terms used herein, such as 'unit' or 'module', mean entities for processing at least one function or operation. These entities may be implemented by hardware, software, or a combination of hardware and software.

As used herein, the expression "magnetic material" refers to a material with magnetism, i.e., a material magnetized within a magnetic field. Examples of the magnetic material include ferromagnetic material, paramagnetic material, diamagnetic material, and ferrimagnetic material. Examples of a device including magnetic material include a speaker, a magnetic resonance imaging (MRI) system, and a portable terminal, but are not limited thereto. However, for convenience of explanation, exemplary embodiments will be described with reference to a speaker as a device including magnetic material.

In the following description, the same drawing reference numerals are used for the same elements even in different drawings. The matters defined in the description, such as detailed construction and elements, are provided to assist in a comprehensive understanding of exemplary embodiments. Thus, it is apparent that exemplary embodiments can be carried out without those specifically defined matters. Also, well-known functions or constructions are not described in detail since they would obscure exemplary embodiments with unnecessary detail.

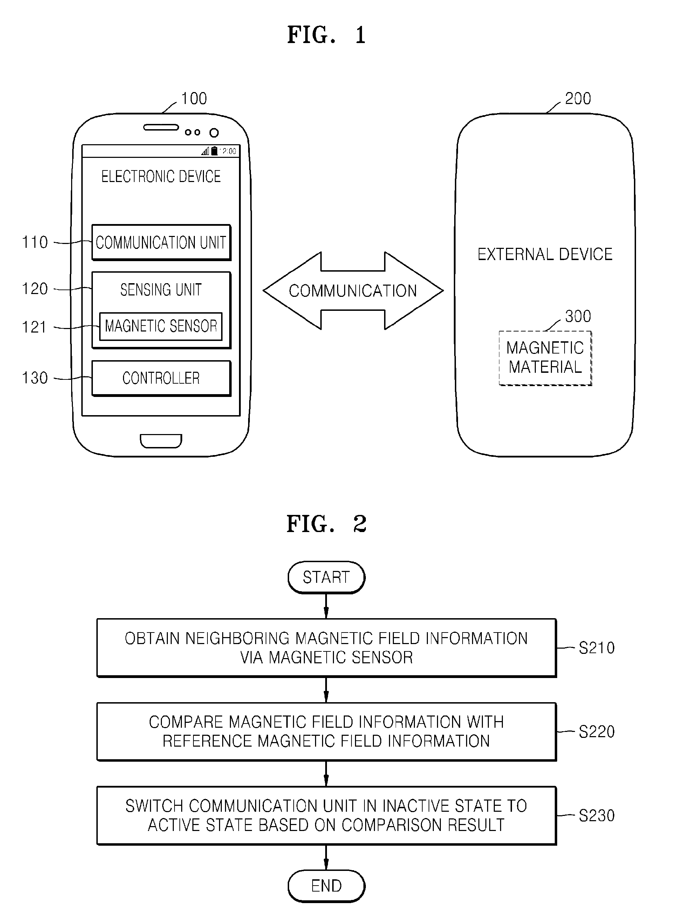

FIG. 1 is a diagram of a communication system according to an exemplary embodiment.

Referring to FIG. 1, a communication system according to an exemplary embodiment may include an electronic device 100 and an external device 200.

The electronic device 100 may include at least one communication unit 110 for communicating with the external device 200, a sensing unit 120, and a controller 130.

The communication unit 110 may include at least one element that enables communication between the electronic device 100 and the external device 200 or between the electronic device 100 and a server (not shown). For example, the communication unit 110 may include a short-range wireless communication unit, a microphone, or the like. The communication unit 110 may use short-range wireless communication technologies including, but not limited to, radio local area network (Wi-Fi), Bluetooth, ZigBee, Wi-Fi Direct (WFD), Ultra wideband (UWB), Infrared Data Association (IrDA), Bluetooth Low Energy (BLE), Near Field Communication (NFC), and the like.

In an exemplary embodiment, Wi-Fi may be in an infrastructure mode in which a plurality of terminals having access points (APs) for wireless transmission within a predetermined radius transmit or receive data to or from one another or an ad hoc mode in which a plurality of terminals transmit or receive data to or from one another in a peer-to-peer (P2P) form without an AP.

Bluetooth is a wireless technology standard for communications at a lower power level between wireless communication devices over short distances. UWB is a radio technology for transmission of a larger quantity of digital data at a lower power level over a wide range of spectrum frequencies.

WFD is a new version of Wi-Fi technologies that enables devices equipped with WFD to directly communicate with one another, i.e., without a hotspot, a router, or an AP, to share information. ZigBee as an IEEE 802.15.4 standard supporting short-range communication is a wireless network technology for short-range communication within about 10 m to about 20 m at home or offices and for ubiquitous computing.

BLE is a short-range communication technology as a core technology of Bluetooth 4.0. Compared to the classic Bluetooth standard, BLE provides a relatively short duty cycle, lower production cost, and reduced power consumption so that devices may operate for several years even with a coin-sized battery.

NFC is a communication technology using a contactless near field radio communication unit as a radio-frequency identification (RFID) tag using a frequency of 13.56 MHz, which enables data transmission between neighboring terminals in a distance of 10 cm. NFC may include a P2P mode, a reader/writer (R/W) mode, and a card emulation mode.

According to an exemplary embodiment, the electronic device 100 may search for the external device 200 via at least one communication unit 110. For example, the electronic device 100 may receive advertising information from the external device 200, and analyze the received advertising information, thereby searching for the external device 200. According to an exemplary embodiment, the advertising information may include at least one of identification information of the external device 200, capability information of the external device 200, state information of the external device 200, and a preferred communication method of the external device 200, but is not limited thereto.

According to an exemplary embodiment, the identification information of the external device 200, which is unique information about the external device 200 for identification, may be, for example, a media access control (MAC) address, a device identification (ID), a device name, a product serial number, or a nickname.

According to an exemplary embodiment, the capability information of the external device 200, which is information about functions supported by the external device 200, may include, for example, information about a supported communication mode, for example, BLE, Bluetooth, NFC, or Wi-Fi, information about a sensor, for example, a magnetic sensor, an acceleration sensor, a temperature sensor, a gyroscope sensor, or a proximity sensor included in the external device 200, and information about available services, for example, universal plug and play (UPnP) or digital living network alliance (DLNA), but is not limited thereto.

According to an exemplary embodiment, the state information of the external device 200 which is information indicating a current state of the external device 200 may include, for example, information about whether a communication unit of the external device 200 is in an active or inactive state, information about whether a sensor of the external device 200 is in an active or inactive state, and information about a mode of the external device 200 , for example, a locked mode, an operation mode, a vibration mode, a screen auto-rotation mode, or a synchronization mode, but is not limited thereto.

According to an exemplary embodiment, information about the preferred communication mode of the external device 200 may mean information about an order of priority of communication methods preferred by the external device 200. According to an exemplary embodiment, the advertising information may be broadcast as an advertising packet.

According to an exemplary embodiment, the electronic device 100 may detect a sound signal including the advertising information output from the external device 200. The electronic device 100 may decode the sound signal to identify the identification information of the external device 200.

According to an exemplary embodiment, the sensing unit 120 may include a magnetic sensor (or magnetometer) 121. The magnetic sensor 121 senses magnetism. For example, the magnetic sensor 121 may include three sensors in X-, Y-, and Z-axis directions, respectively, for sensing magnetic field intensities. The magnetic sensor 121 may measure a magnetic field direction, magnetic field intensity, or magnetism based on a sum of output vectors from the sensors in X-, Y- and Z-axis directions.

Accordingly, in an exemplary embodiment, when a user places the electronic device 100 closer to a magnetic material 300 in the external device 200, the electronic device 100 may obtain information about a change in a magnetic field, magnetic field intensity, a magnetic field direction, or magnetism via the magnetic sensor 121.

The controller 130 may control an overall operation of the electronic device 100. For example, the controller 130 may control the communication unit 110 and the sensing unit 120. The controller 130 may include a sensor hub of a seamless sensing platform (SSP). The sensor hub may be a kind of a microcontroller unit (MCU). The controller 130 may be embodied as a processor, a microprocessor, or the like.

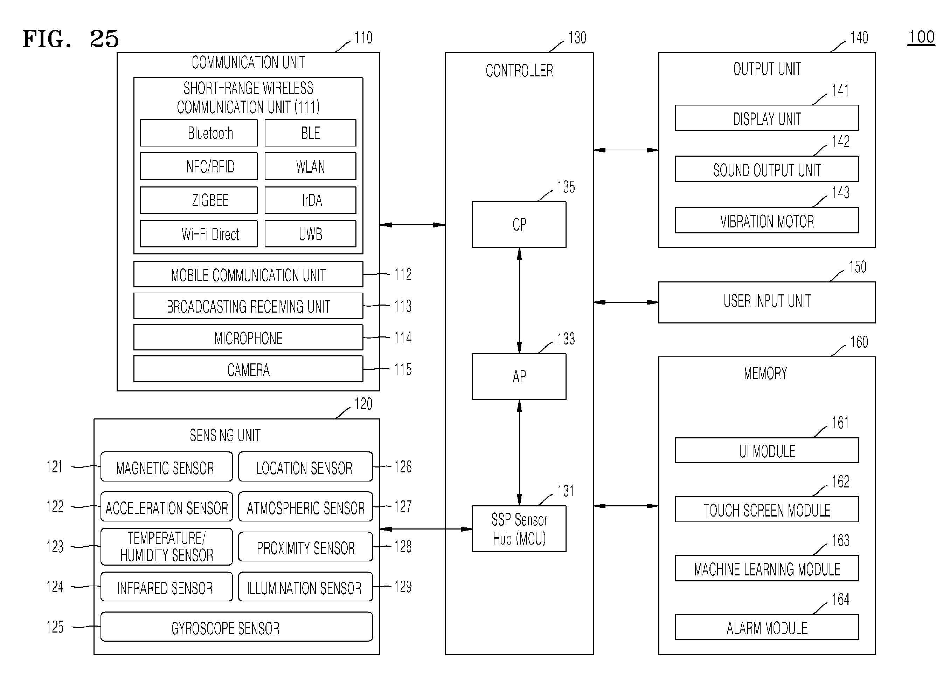

According to exemplary embodiments, in the electronic device 100, the SSP of the controller 130 may operate independently of the AP. The electronic device 100 may connect the sensing unit 120 to the sensor hub of the SSP to obtain sensing information, without waking up the AP in a sleep mode, and identify conditions of the electronic device 100 as well as surrounding conditions thereof. The sensor hub of the SSP may wake up the AP in the sleep mode in a specific circumstance. Each of elements of the electronic device 100 will be described later in greater detail with reference to FIG. 25.

According to an exemplary embodiment, the electronic device 100 may be implemented in various forms. For example, the electronic device 100 as used herein may include a mobile phone, a smartphone, a laptop computer, a tablet PC, an e-book terminal, a digital broadcasting terminal, a personal digital assistant (PDA), a portable multimedia player (PMP), a navigation, or an MP3 player, but is not limited thereto.

The external device 200 may be any device including the magnetic material 300. For example, the external device 200 may include an audio system with a speaker, a display device, a mobile phone, a smartphone, a laptop computer, a navigation, a magnetic hard disk, or a toy with a motor, for example, a toy automobile or a toy helicopter, but is not limited thereto.

According to an exemplary embodiment, the magnetic material 300 may be installed in the external device 200 or outside the external device 200 as a dongle or an accessory.

The external device 200 may include a communication unit (not shown) for communicating with the electronic device 100. For example, the external device 200 may include a short-range wireless communication unit or a speaker. According to an exemplary embodiment, the external device 200 may broadcast information such as, for example, identification information, information about supported communication methods, current state information, for example, an on/off state of a communication unit of the external device 200 or an on/off state of a sensor of the external device 200, or service information about available services. The external device 200 may broadcast the above information in predetermined time intervals via the short-range wireless communication unit thereof. For example, the external device 200 may broadcast the identification information in a form of an advertising packet.

Non-limiting examples of a short-range communication technology supported by the external device 200 include Wi-Fi, Bluetooth, ZigBee, Wi-Fi Direct (WFD), UWB, IrDA, BLE, and NFC.

According to an exemplary embodiment, the external device 200 may output a sound signal including at least one from among the identification information, the information about supported communication methods, the current state information, and the service information via the speaker. For example, the external device 200 may modulate at least one from among the identification information, the information about supported communication methods, the current state information, and the service information, and transmit the modulated information to the outside by inserting the modulated information in an inaudible region of the sound signal.

According to an exemplary embodiment, the external device 200 may encode the information with a predetermined encryption code to secure information security and transmit the encrypted information to the electronic device 100.

Hereinafter, when the user places the electronic device 100 including the magnetic sensor 121 closer to the magnetic material 300 of the external device 200, the electronic device 100 may control to activate the communication unit 110 thereof based on information about a magnetic field sensed by the magnetic sensor 121 to communicate with the external device 200. This will be further described in detail with reference to FIG. 2.

FIG. 2 is a flowchart of a method of controlling a communication unit in an electronic device according to an exemplary embodiment.

Referring to FIG. 2, in operation S210, the electronic device 100 may obtain information about a magnetic field around the electronic device 100 via the magnetic sensor 121. For example, the magnetic field information may include a magnetic field direction, magnetic field intensity, magnetism, a magnetic field intensity variation, and a magnetism variation, but is not limited thereto.

In another exemplary embodiment, the magnetic field information may include a magnetic field intensity value on at least one of X-, Y-, and Z-axis. For example, the electronic device 100 may generate the magnetic field information by using magnetic values on three axes, i.e., the X-, Y-, and Z-axes that are measured by the magnetic sensor 121.

In another exemplary embodiment, the electronic device 100 may obtain the magnetic field information at a predetermined time interval of, for example, about 0.1 seconds, via the magnetic sensor 121. In some other exemplary embodiments, when a movement of the electronic device 100 is detected, the electronic device 100 may obtain the magnetic field information via the magnetic sensor 121. When the electronic device 100 is within a predefined area, for example, at home or an office, the electronic device 100 may obtain the magnetic field information via the magnetic sensor 121 that may automatically operate without a user input.

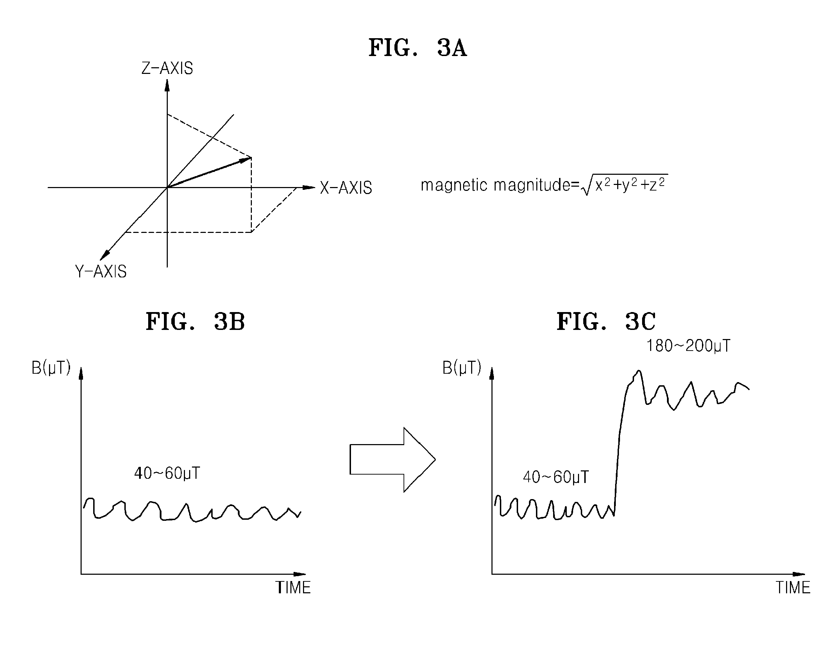

According to an exemplary embodiment, when the electronic device 100 obtains the magnetic field information via the magnetic sensor 121, angular velocity information obtained by a gyroscope sensor and acceleration information obtained by an acceleration sensor may be considered. The magnetic field information obtained by the magnetic sensor 121 will be described later with reference to FIGS. 3 to 7.

In operation S220, the electronic device 100 may compare the magnetic field information obtained by the magnetic sensor 121 with reference magnetic field information.

According to an exemplary embodiment, the reference magnetic field information may refer to information about magnetic field intensity, magnetism, or a threshold value that may be used as a reference for switching the communication unit 110 from an inactive state to an active state. For example, the reference magnetic field information may be set to information about a magnetic field of 180 $\mu$T.

According to another exemplary embodiment, the reference magnetic field information, although not limited thereto, may be set by the user, the electronic device 100, or an external server (not shown).

According to another exemplary embodiment, the electronic device 100 may extract the reference magnetic field information from a memory (not shown) included in the electronic device 100 and compare the same with the magnetic field information obtained via the magnetic sensor 121. Here, when an application processor (AP) of the electronic device 100 is in a sleep mode, the sensor hub (e.g., an MCU) of the SSP of the electronic device 100 may compare the magnetic field information obtained via the magnetic sensor 121 with the reference magnetic field information, which may reduce power consumption in the electronic device 100. In another exemplary embodiment, the AP of the electronic device 100 may compare the magnetic field information obtained via the magnetic sensor 121 with the stored reference magnetic field information. In this embodiment, the sensor hub may be in a sleep mode.

In operation S230, the electronic device 100 may switch the communication unit for communication with the external device 200 from an inactive state to an active state based on a result of the comparison between the magnetic field information obtained via the magnetic sensor 121 and the reference magnetic field information. Here, the electronic device 100 may transmit data to or receive data from the external device 200 via at least one communication unit 110 switched to the active state.

For example, when the magnetic field information, for example, magnetic field intensity of about 180 to about 200 uT obtained via the magnetic sensor 121 is maintained higher than or equal to the reference magnetic field information, for example, a magnetic field intensity of about 180 $\mu$T for a predetermined time, for example, about 2 seconds, the electronic device 100 may switch the communication unit 110 from an inactive state to an active state. That is, when a user places the electronic device 100 closer to the external device 200 including the magnetic material 300 such that magnetic field intensity (or a variation in the magnetic field intensity) is higher than or equal to the reference magnetic field intensity (or a reference variation in the magnetic field intensity), the electronic device 100 may switch the communication unit 110 in an inactive state to an active state.

The electronic device 100 may maintain the communication unit 110 in the inactive state when the magnetic field information, for example, magnetic field intensity of about 40 to 60 $\mu$T obtained via the magnetic sensor 121 is less than the reference magnetic field information, for example, magnetic field intensity of about 180 $\mu$T.

According to an exemplary embodiment, when the sensor hub such as an MCU of the SSP determines that the magnetic field information is higher than or equal to the reference magnetic field information while monitoring the magnetic field information obtained by the magnetic sensor 121, the sensor hub may activate the AP in the sleep mode. The AP may receive the current state information of the electronic device 100, for example, magnetic field information or a task to perform from the sensor hub such as an MCU). The AP may switch the communication unit 110 in an inactive state to an active state based on the information transmitted from the sensor hub such as an MCU.

Therefore, according to the above-described exemplary embodiments, the electronic device 100 may maintain the communication unit 110 in the inactive state to reduce standby power consumed by the communication unit 110. The electronic device 100 may also switch the communication unit 110 in an inactive state to an active state when the magnetic field information obtained by the magnetic sensor 121 is greater than or equal to the reference magnetic field information, automatically without user manipulation, for communication with the external device 200 when needed.

Hereinafter, the magnetic field information obtained by the electronic device 100 via the magnetic sensor 121 and the predetermined reference magnetic field information will be described in greater detail with reference to FIGS. 3 to 7.

FIGS. 3 A, 3B, and 3C are diagrams for explaining magnetic field information according to exemplary embodiments.

Referring to FIG. 3A, the electronic device 100 may obtain a sum of output vectors on X-, Y-, and Z- axes, i.e., magnetic field intensity that is measured by the magnetic sensor 121 as the magnetic field information. For example, the electronic device 100 may calculate a value of the sum of the three vectors $(\sqrt{x^2 + y^2 + z^2})$, and compare the calculated value $(\sqrt{x^2 + y^2 + z^2})$ with the reference magnetic field information, for example, reference magnetic field intensity.

Although, in the embodiment of FIG. 3A, the sum of the magnitudes of three vectors on the X-, Y-, and Z-axes, which is represented as $\sqrt{x^2 + y^2 + z^2}$, is described as an example of the magnetic field information obtained via the magnetic sensor 121, exemplary embodiments are not limited thereto. According to an exemplary embodiment, the magnetic field information may be a magnitude of one of the vectors on the X-, Y-, and Z-axes, i.e., |x|, |y|, or |z|, or may be a sum of two of the vectors on the X-, Y-, and Z-axes, i.e., $\sqrt{x^2 + y^2}$, $\sqrt{x^2 + z^2}$ or $\sqrt{y^2 + z^2}$. According to another exemplary embodiment, the magnetic field information may be a sum of squares of the three vector magnitudes, which is represented as $x^2 + y^2 + z^2$. However, for convenience of explanation, the sum of the magnitudes of the three vectors, which is represented as $\sqrt{x^2 + y^2 + z^2}$, will be described as an example of the magnetic field information hereinafter.

As illustrated in FIG. 3B, when the electronic device 100 is apart from the magnetic material 300 by a predetermined distance or more, magnetic field intensity B measured by the magnetic sensor 121 may be about 40 μT to about 60 μT.

As illustrated in FIG. 3C, when the electronic device 100 is placed closer to the magnetic material 300 within a distance, for example, 10 cm, the magnetic field intensity B measured by the magnetic sensor 121 may be increased to about 180 μT to about 200 μT from about 40 μT to about 60 μT. The distance between the electronic device 100 and the magnetic material 300 at which the magnetic field intensity B is increased may vary depending on a size of the magnetic material 300. For example, when the size of the magnetic material 300 such as a speaker of a smartphone is smaller, the electronic device 100 needs to be moved closer to the magnetic material 300 within a distance of about 1 cm to increase the magnetic field intensity B. When the external device 200 including the magnetic material 300 is a 70W, 5-inch Loudspeaker system and is in a distance of about 10 cm from the electronic device 100, the magnetic field intensity B measured by the magnetic sensor 121 may be increased. Hereinafter, an exemplary embodiment where the external device 200 including the magnetic material 300 is a 70W, 5-inch Laudspeaker system will be described.

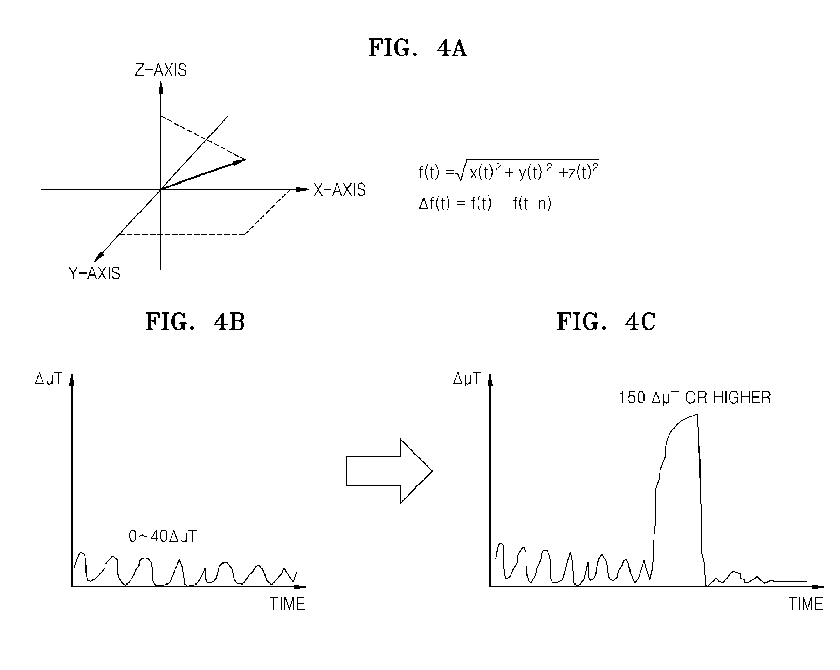

According to an exemplary embodiment, the electronic device 100 may compare an absolute value of magnetic field intensity obtained through the magnetic sensor 121 with reference magnetic field intensity or may compare a magnetic field intensity variation with a reference magnetic field intensity variation. The latter will be described in greater detail with reference to FIGS. 4A to 4C.

FIGS. 4A, 4B, and 4C are diagrams for explaining information about a magnetic field intensity variation according to exemplary embodiments.

As illustrated in FIG. 4A, the electronic device 100 may obtain a variation in a sum of output vectors (i.e., magnetic field intensity) in X-, Y-, and Z- axes measured by the magnetic sensor 121 as the magnetic field information.

For example, the electronic device 100 may define magnetic field intensity at a specific time t as shown in Equation (1).

$$f(t) = \sqrt{x(t)^2 + y(t)^2 + z(t)^2}$$

--------------- Equation (1)

A variation in magnetic field intensity at a time t may be represented by Equation (2).

$$\Delta f(t) = f(t) - f(t - n)$$

----------------- Equation (2)

According to an exemplary embodiment, the electronic device 100 may obtain a magnetic field intensity variation as the magnetic field information by using Equation (1) and Equation (2), and may compare the magnetic field intensity variation with reference magnetic field information, for example, a predetermined reference variation.

When the electronic device 100 is moved apart from the magnetic material 300 by a predetermined distance or more, a variation in the magnetic field intensity B obtained via the magnetic sensor 121 may be about 0 $\Delta\mu$T to about 40 $\Delta\mu$T, as illustrated in FIG. 4B.

When the electronic device 100 and the magnetic material 300 are closer to one another by a distance of, for example, about 10 cm, the magnetic field intensity B obtained via the magnetic sensor 121 may be increased to about 180 $\mu$T to about 200 $\mu$T, as illustrated in FIG. 4C, from about 20 $\mu$T to about 30 $\mu$T, with a magnetic field intensity variation of about 150 $\Delta\mu$T to about t- 180 $\Delta\mu$T, which is higher than or equal to a predetermined reference variation of, for example, 150 $\Delta\mu$T.

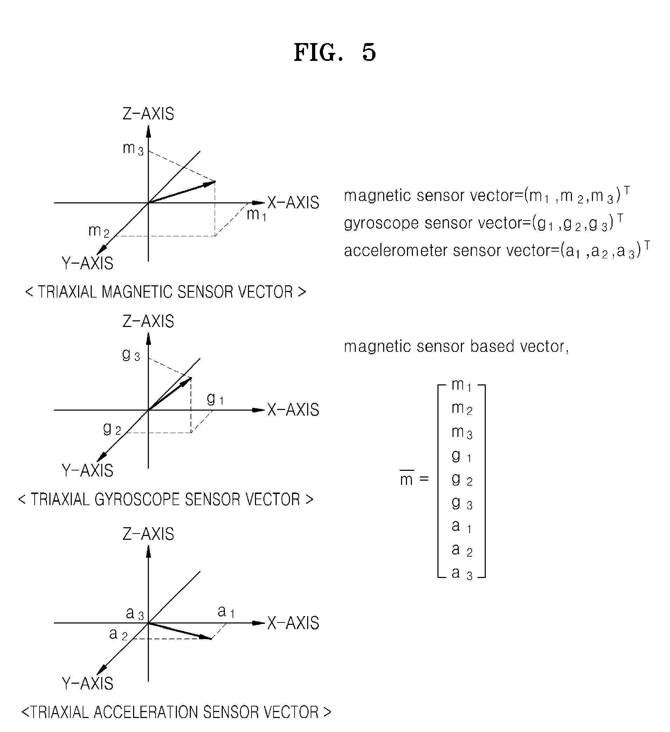

Hereinafter, methods by which the electronic device 100 obtains magnetic field information by using a machine learning algorithm according to exemplary embodiments, will be described in detail with reference to FIGS. 5 to 7.

FIG. 5 is a diagram illustrating a feature vector obtained using a plurality of sensors according to an exemplary embodiment.

According to an exemplary embodiment, the electronic device 100 may consider a gyroscope sensor value and an acceleration sensor value, in addition to a magnetic sensor value, in obtaining the magnetic field information via the magnetic sensor 121. In particular, when the magnetic sensor value is measured, the electronic device 100 may or may not be moved. Accordingly, the electronic device 100 may consider angular velocity information and acceleration information to obtain more accurate magnetic field information.

Referring to FIG. 5, the electronic device 100 may obtain a first vector ($[m_1, m_2, m_3]^T$) as a magnetic sensor vector related to a magnetic field obtained from a triaxial magnetic sensor, a second vector ($[g_1, g_2, g_3]^T$) as a gyroscope sensor vector related to an angular velocity obtained from a triaxial gyroscope sensor, and a third vector (($[a_1, a_2, a_3]^T$) as an acceleration sensor vector related to acceleration obtained from a triaxial acceleration sensor. The electronic device 100 may sum the first vector, the second vector, and the third vector to obtain a feature vector ($\overline{m}$), as represented below in Equation (3), as magnetic field information.

$$\overline{m} = [m_1, m_2, m_3, g_1, g_2, g_3, a_1, a_2, a_3]^T$$

--------------- Equation (3)

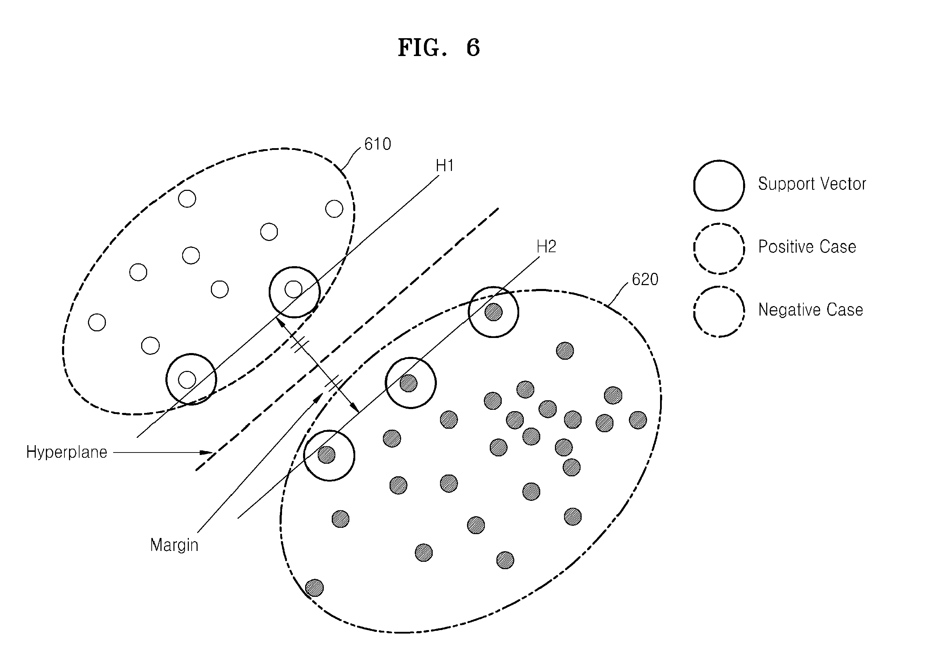

The electronic device 100 may determine whether the magnetic material 300 is near or whether there is a pattern in application fields by applying the feature vector ($\overline{m}$) to a machine learning algorithm. This will be further descried later with reference to FIG. 6. In other exemplary embodiments, the electronic device 100 may determine whether the magnetic material 300 is near by using methods other than the machine learning algorithm.

FIG. 6 is a diagram illustrating a support vector machine (SVM) method according to an exemplary embodiment.

Referring to FIG. 6, the SVM method is a method in which, when data represented in a white circle and data represented in a black circle are given for learning, the given data are grouped into a white circle group (or a positive case) or a black circle group (or a negative case), while focusing on boundary data between the two groups of circles. The SVM method may calculate a hyperplane for classification and regression of data of the white and black circle groups. For example, the SVM method may obtain a support vector, points on planes H1 and H2, illustrated in FIG. 6 by using learning data and calculate the hyperplane with a maximal margin. The support vector may be data involved in grouping the two groups.

When the electronic device 100 obtains a new feature vector ($\overline{m}$) via the magnetic sensor 121, a gyroscope sensor and an acceleration sensor, the electronic device 100 may apply the feature vector ($\overline{m}$) to an SVM algorithm to determine whether the magnetic material 300 is near. For example, when the new feature vector ($\overline{m}$) belongs to a first group 610, the electronic device 100 may determine that the magnetic material 300 is within a predetermined distance. When the new feature vector ($\overline{m}$) belongs to a second group 620, the electronic device 100 may determine that the magnetic material 300 is not a predetermined distance.

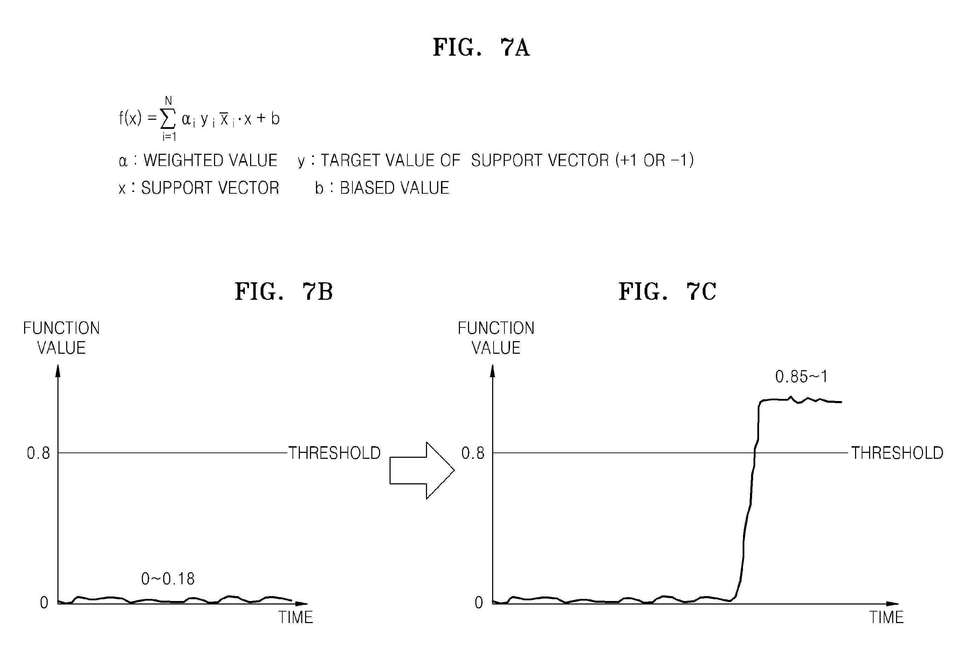

FIGS. 7A, 7B, and 7C are diagrams illustrating a function for obtaining magnetic field information according to exemplary embodiments.

As shown in FIG. 7A, when there are input values represented as $X = [x_1, x_2, x_3, x_4, x_5, x_6, x_7, x_8, x_9]^T$, and N number of support vectors, the electronic device 100 may obtain a function as below by using an SVM algorithm.

$$f(x) = \sum_{i=1}^{N} \alpha_i y_i \overline{x_i} \cdot x + b$$

---------------- Equation (4)

wherein $\alpha$ represents a weighted value, y represents a target value of a support vector (+1 or -1), x represents a support vector, and b represents a biased value.

The electronic device 100 may predict magnetic field intensity or magnetism by using the function. The electronic device 100 may use a feature vector ($\overline{m}$) as an input value to calculate a function value and transform the function value into a value between 0 to 1 by normalization.

As illustrated in FIG. 7B, when the normalized function value is less than a predetermined threshold of, for example, about 0.8, the electronic device 100 may determine that the magnetic material 300 is not within a predetermined distance.

As illustrated in FIG. 7C, when the normalized function value is higher than or equal to a predetermined threshold of, for example, about 0.8, the electronic device 100 may determine that the magnetic material 300 is within a predetermined distance.

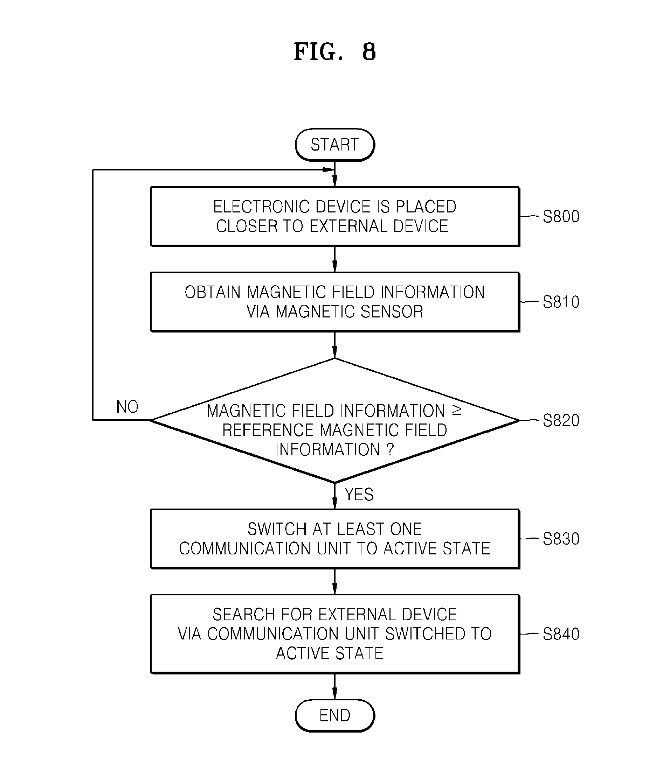

Hereinafter, a method by which the electronic device 100 searches for the external device 200 via the communication unit 110 switched to an active state when the external device 200 including the magnetic material 300 is determined to be within a predetermined distance according to an exemplary embodiment will be described in greater detail with reference to FIG. 8.

FIG. 8 is a flowchart of a method of searching for an external device according to an exemplary embodiment.

In operation S800, the electronic device 100 may be placed closer to the external device 200 including the magnetic material 300. For example, the user may place the electronic device 100 closer to an audio system.

In operation S810, the electronic device 100 may obtain magnetic field information via the magnetic sensor 121. According to an exemplary embodiment, the magnetic field information may be magnetic field direction, magnetic field intensity, magnetism, magnetic field intensity variation, or magnetism variation, but is not limited thereto. In some other exemplary embodiments, the magnetic field information may be an integer indicating a level of magnetic field intensity or magnetism, or may be a vector value having a direction and a magnitude. The method by which the electronic device 100 obtains magnetic field information via the magnetic sensor 121 is described above with reference to FIGS. 3 to 7, and thus a detailed description thereof is omitted here.

In operation S820, the electronic device 100 may determine whether the magnetic field information obtained via the magnetic sensor 121 is higher than or equal to reference magnetic field information. For example, when the reference magnetic field information is about 180 $\mu$T, the electronic device 100 may determine whether the magnetic field intensity obtained via the magnetic sensor 121 is maintained higher than or equal to 180 $\mu$T for a predetermined time.

When the magnetic field information obtained via the magnetic sensor 121 is less than the reference magnetic field information, the electronic device 100 may maintain the communication unit 110 in the inactive state. The electronic device 100 may also continuously monitor neighboring magnetic field information via the magnetic sensor 121.

In operation S830, when the magnetic field information obtained via the magnetic sensor 121 is higher than or equal to the reference magnetic field information, the electronic device 100 may switch at least one communication unit 110 to an active state. According to an exemplary embodiment, the electronic device 100 may switch one or at least two communication units to an active state.

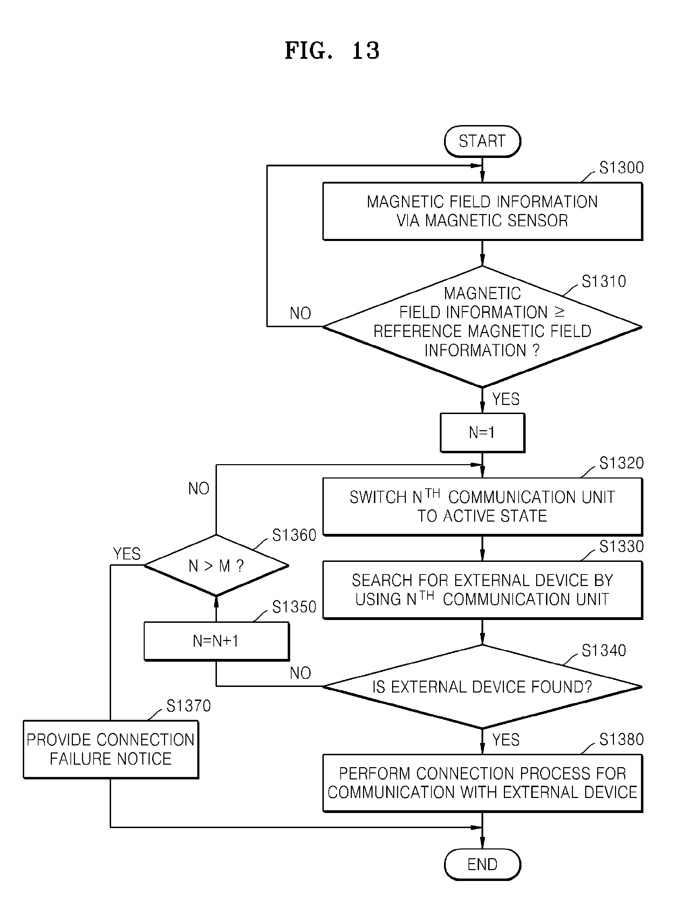

According to an exemplary embodiment, the electronic device 100 may simultaneously or sequentially activate a plurality of communication units. Sequential activation of a plurality of communication units by the electronic device 100 will be described in greater detail later with reference to FIG. 13.

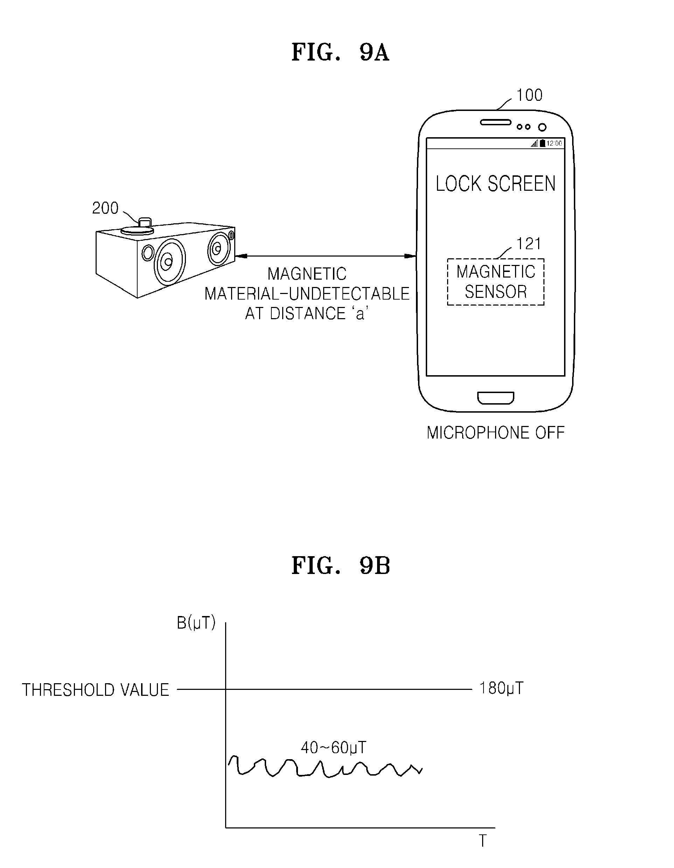

In operation S840, the electronic device 100 searches for the external device 200 via the communication unit switched to the active state. For example, the electronic device 100 may receive advertising information from the external device 200 via the communication unit switched to the active state. The advertising information from the external device 200 may include at least one of identification information such as a device name, ID, or identification code of the external device 200, state information of the external device 200, and capability information of the external device 200 in a supported communication method. According to an exemplary embodiment, the electronic device 100 may detect the external device 200 by analyzing the received advertising information. This will be described in greater detail with reference to FIGS. 9 to 12.

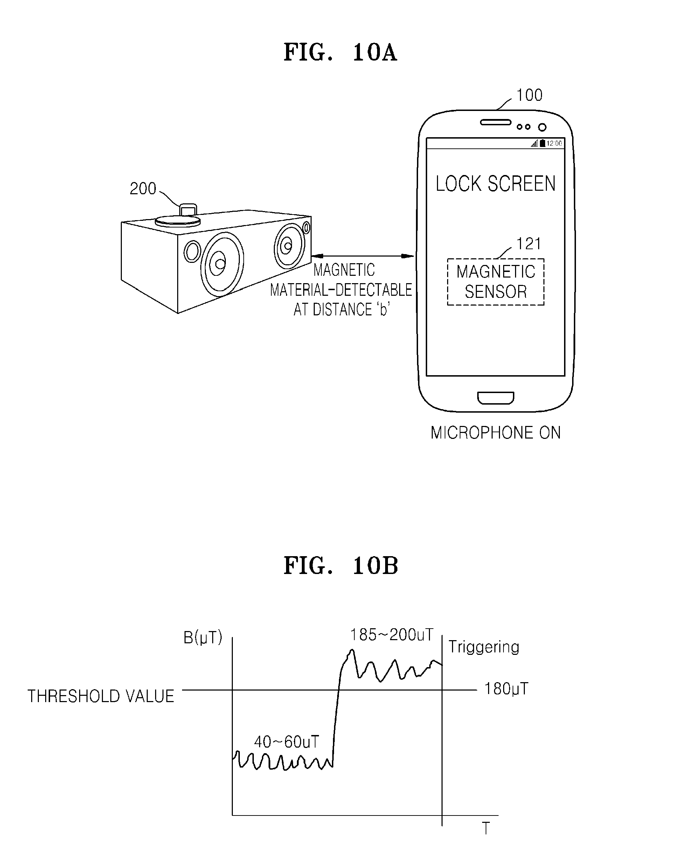

FIGS. 9A, 9B, 10A and 10B are diagrams illustrating exemplary embodiments where a microphone of an electronic device is switched to an active state.

In the embodiment of FIGS. 9 and 10, a portable terminal and an audio system are described as examples of the electronic device 100 and the external device 200, respectively. The audio system 200 may include the magnetic material (not shown).

Referring to FIG. 9A, when the electronic device 100 is separated by a distance 'a' of, for example, 20 m, from the audio system which is the external device 200, the magnetic sensor 121 of the electronic device 100 may not detect the magnetic material in the audio system.

Accordingly, as illustrated in FIG. 9B, the magnetic field information, i.e., the magnetic field intensity B obtained via the magnetic sensor 121 is about 40 to about 60 $\mu$T, which is less than the reference magnetic field intensity of, for example, about 180 $\mu$T, and accordingly, the electronic device 100 may maintain a microphone thereof in the inactive state.

Referring to FIG. 10A, when a user places the electronic device 100 closer to the audio system 200, the magnetic sensor 121 of the electronic device 100 may detect the magnetic material in the audio system 200. That is, when the electronic device 100 is in a distance 'b', for example, 10 cm from the audio system which is the external device 200, the magnetic sensor 121 of the electronic device 100 may detect the magnetic material in the audio system 200 such that a range of the magnetic field information varies.

As illustrated in FIG. 10B, the magnetic field intensity B previously maintained at 40-60 $\mu$T may be increased to about 185 to about 200 $\mu$T upon detection of the magnetic material in the audio system 200. Since the magnetic field information, i.e., the magnetic field intensity B of about 185 to about 200 $\mu$T obtained via the magnetic sensor 121 is greater than the reference magnetic field intensity of about 180 $\mu$T, the electronic device 100 may switch the microphone in an inactive state to an active state.

According to an exemplary embodiment, the electronic device 100 may detect a sound signal output from the audio system which is the external device 200 through a microphone thereof switched into the active state, and may analyze the sound signal output through the microphone. Here, the sound signal may include at least one of identification information of the audio system 200, state information of the audio system 200, and capability information of the audio system 200 about a supported communication method, for example, Bluetooth, WiFi, BLE, or NFC. The electronic device 100 may detect the audio system 200 based on the received sound signal.

According to an exemplary embodiment, power consumption of the electronic device 100 may be reduced when the microphone is preset in a standby mode. The electronic device 100 may also automatically activate the microphone without a user's manipulation when receiving a sound signal through the microphone.

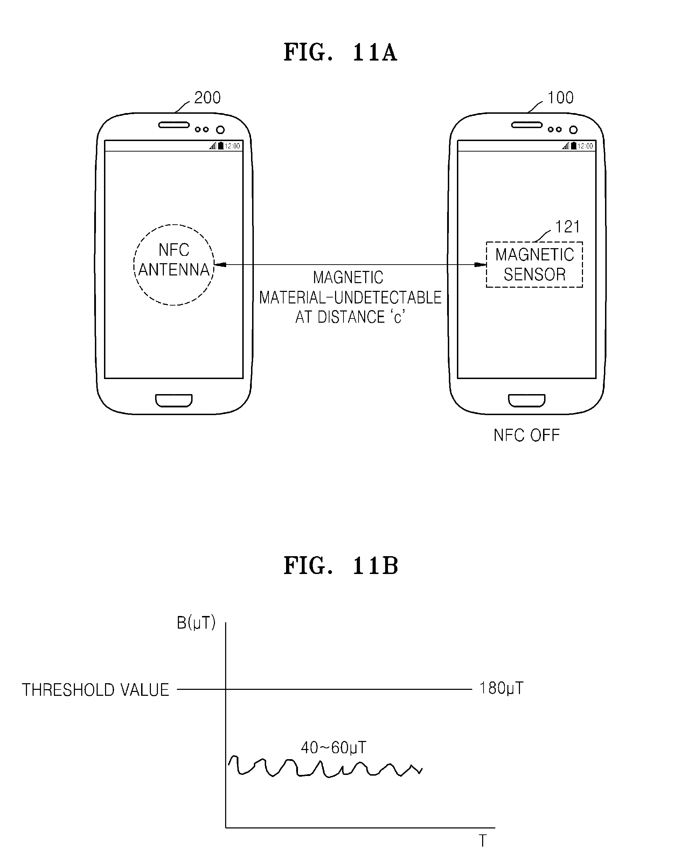

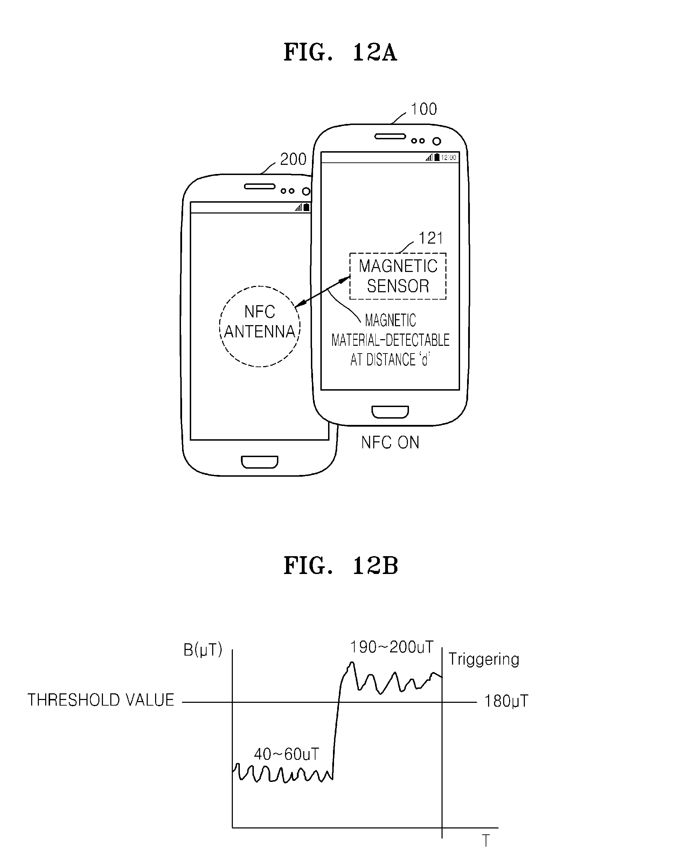

FIGS. 11A, 11B, 12A and 12B are diagrams illustrating exemplary embodiments where a short-range wireless communication unit of an electronic device is switched to an active state.

In the exemplary embodiments of FIGS. 11A to 12B, portable terminals are used as examples of the electronic device 100 and the external device 200. The portable terminal, which is the external device 200 may be equipped with a speaker and include the magnetic material (not shown).

Referring to FIG. 11A, when the electronic device 100 is separated by a distance c of, for example, about 2 m, from the portable terminal 200 which is the external device, the magnetic sensor 121 of the electronic device 100 may not detect the magnetic material in the external device 200.

Accordingly, as illustrated in FIG. 11B, the magnetic field information, i.e., the magnetic field intensity obtained via the magnetic sensor 121 is about 40 to about 60 $\mu$T, which is less than the reference magnetic field intensity of about 180 $\mu$T, and accordingly, the electronic device 100 may maintain the short-range wireless communication unit thereof in the inactive state. Non-limiting examples of the short-range wireless communication unit include a WiFi communication unit, a Bluetooth communication unit, a near field communication (NFC) unit, a BLE communication unit, an infrared communication unit, and a ZigBee communication unit. For convenience of explanation, exemplary embodiments will be described with reference to an NFC unit as a short-range wireless communication unit.

Referring to FIG. 12 A, when a user places the electronic device 100 closer to the external device 200, the magnetic sensor 121 of the electronic device 100 may detect the magnetic material 300 in the external device 200. That is, when the electronic device 100 is in a distance d, for example, 5 cm from the external device 200 which is the portable terminal, the magnetic sensor 121 of the electronic device 100 may detect the magnetic material 300 in the external device 200 such that a range of the magnetic field intensity varies.

As illustrated in FIG. 12B, the magnetic field intensity B previously maintained at about 40 to about 60 $\mu$T may be increased to about 185 to about 200 $\mu$T. Since the magnetic field intensity of about 190 to about 200 $\mu$T obtained via the magnetic sensor 121 is greater than the reference magnetic field information of, for example, 180 $\mu$T, the electronic device 100 may switch the NFC unit in the inactive state to an active state.

Therefore, when the user places the electronic device 100 into contact with the external device 200, the electronic device 100 may receive advertising information transmitted from the external device 200 through the NFC unit. For example, the electronic device 100 may receive at least one from among identification information of the portable terminal, for example, an electronic device's ID, a MAC address, an electronic device's model name, or a product serial No., state information of the portable terminal, capability information of the portable terminal about a supported communication method, for example, Bluetooth, WiFi, BLE, or NFC, and information about a preferred communication method from the external device 200.

According to an exemplary embodiment, power consumption of the electronic device 100 may be reduced when the short-range wireless communication unit thereof is preset in a standby mode. The electronic device 100 may also automatically activate the short-range wireless communication unit without a user's manipulation when receiving a signal through the short-range wireless communication unit thereof. Hereinafter, a method by which the electronic device 100 automatically activates a plurality of communication units based on magnetic field information will now be described in greater detail with reference to FIG. 13.

FIG. 13 is a flowchart of a method by which an electronic device sequentially activates a plurality of communication units according to an exemplary embodiment.

In operation S1300, the electronic device 100 may obtain magnetic field information via the magnetic sensor 121. In operation S1310, the electronic device 100 may compare the magnetic field information and reference magnetic field information.

When the magnetic field information obtained via the magnetic sensor 121 is less than the reference magnetic field information, the electronic device 100 may maintain the communication unit in the inactive state. The electronic device 100 may also continuously monitor surrounding magnetic field information via the magnetic sensor 121. The electronic device 100 may switch a plurality of communication units in an inactive state to an active state when the magnetic field information obtained via the magnetic sensor 121 is higher than or equal to the reference magnetic field information.

According to an exemplary embodiment, the electronic device 100 may sequentially activate a plurality of communication units based on priority thereof. The priorities of the communication units may be set by a user or a system, and may vary depending on situations.

In another exemplary embodiment, the electronic device 100 may sequentially activate a plurality of communication units based on respective amount of power consumption thereof. For example, when the amount of power consumption is reduced in an order of a BLE communication unit, an NFC unit, and a microphone, the electronic device 100 may sequentially activate the communication units in the order of the BLE communication unit, the NFC unit, and the microphone, or vice versa. In another exemplary embodiment, the electronic device 100 may activate a plurality of communication units in a random order.

In operation S1320, the electronic device 100 may switch an N$^{th}$ communication unit to an active state. In operation S1330, the electronic device 100 may search for the external device 200 by using the N$^{th}$ communication unit. In operation S1340, when the external device 200 is not found via the N$^{th}$ communication unit, the electronic device 100 may switch an (N+1)$^{th}$ communication unit to an active state in operation S1350. According to an exemplary embodiment, the electronic device 100 may switch the N$^{th}$ communication unit to an inactive state and switch the (N+1)$^{th}$ communication unit to an active state.

The electronic device 100 may search for the external device 200 by using the (N+1)$^{th}$ communication unit. When the external device 200 is not found via the (N+1)$^{th}$ communication unit, the electronic device 100 may switch an (N+2)$^{th}$ communication unit to an active state to search for the external device 200 via the (N+2)$^{th}$ communication unit. In an exemplary embodiment, the electronic device 100 may switch the (N+1)$^{th}$ communication unit to an inactive state. Operations S1320 to S1360 may be repeatedly performed.

In operation S1360, the electronic device 100 may determine whether all of M communication units of the electronic device 100 have been switched to an active state to search for the external device 200, wherein M indicates a total number of the communication units. When there is any communication unit that has not been switched to an active state to search for the external device 200, the electronic device 100 may switch the corresponding communication unit to an active state to search for the external device 200.

In operation S1370, when the external device 200 is not found using all of the communication units, the electronic device 100 may provide a connection failure notice on a screen thereof.

In operation S1380, when the external device 200 is found successfully, the electronic device 100 may perform a process of connecting to the external device 200 for communication with the external device 200. For example, the electronic device 100 may request the external device 200 for a connection for communication or a negotiation for determining a communication method.

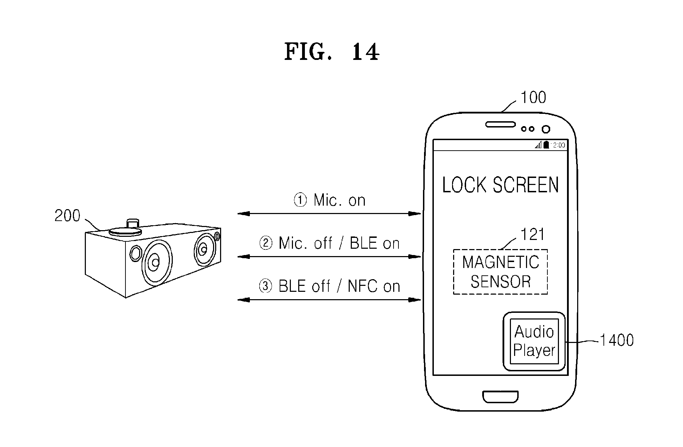

Hereinafter, sequentially activating a plurality of communication units of the electronic device 100 will be described in greater detail with reference to FIG. 14.

FIG. 14 is a diagram illustrating an exemplary embodiment of sequentially activating a plurality of communication units.

In the exemplary embodiment of FIG. 14, a portable terminal and an audio system are used as examples of the electronic device 100 and the external device 200, respectively. To detect the communication method supported by the external device 200, the electronic device 100 may sequentially activate the communication units thereof based on a predetermined priority order of the communication units.

Referring to FIG. 14, when the user places the electronic device 100 closer to an audio system which is the external device 200, the magnetic field intensity obtained by the magnetic sensor 121 of the electronic device 100 may be higher than or equal to a reference magnetic field intensity. In this case, the electronic device 100 may switch a microphone thereof in an inactive state to an active state based on a priority order (Operation ①). The electronic device 100 may scan a sound signal output from the audio system 200 through the microphone.

When a sound signal is not output from the audio system 200, the electronic device 100 may not detect the sound signal through the microphone. Accordingly, the electronic device 100 may switch the microphone in the active state to an inactive state after a predetermined time and switch a BLE communication unit in an inactive state to an active state (Operation ②). The electronic device 100 may receive advertising information in the form of, for example, an advertising packet which is broadcast from the audio system 200 via the BLE communication unit.

On the other hand, when the audio system 200 is not equipped with a BLE chip, the electronic device 100 may not receive the advertising information. Accordingly, the electronic device 100 may switch the BLE communication unit in the active state to an inactive state after a predetermined time and switch an NFC unit in an inactive state to an active state (Operation ③).

The electronic device 100 may receive the advertising information transmitted from the audio system 200 via the NFC unit. That is, the electronic device 100 may receive identification information of the audio system 200, state information of the audio system 200, or capability information of the audio system 200 about a supported communication method, which is transmitted from the audio system 200, via the NFC unit thereof.

According to an exemplary embodiment, the electronic device 100 may request the external device 200 for a connection via the NFC unit to perform communication with the external device 200. The electronic device 100 may display an application 1400, for example, an audio player application, related with the audio system 200 on a screen thereof based on the advertising information, e.g., identification information of the audio system 200. Alternatively, for example, the electronic device 100 may display a remote control application for controlling the audio system 200 on the screen thereof. When the application 1400 related with the audio system 200 is not installed in the electronic device 100, the electronic device 100 may automatically search for and install the application 1400 related with the audio system 200.

According to an exemplary embodiment, when the audio system 200 is not found within a predetermined time via the NFC unit, the electronic device 100 may display a message that notifies a failure in connecting to the external device 200 (or a failure in searching for the external device 200) on the screen thereof.

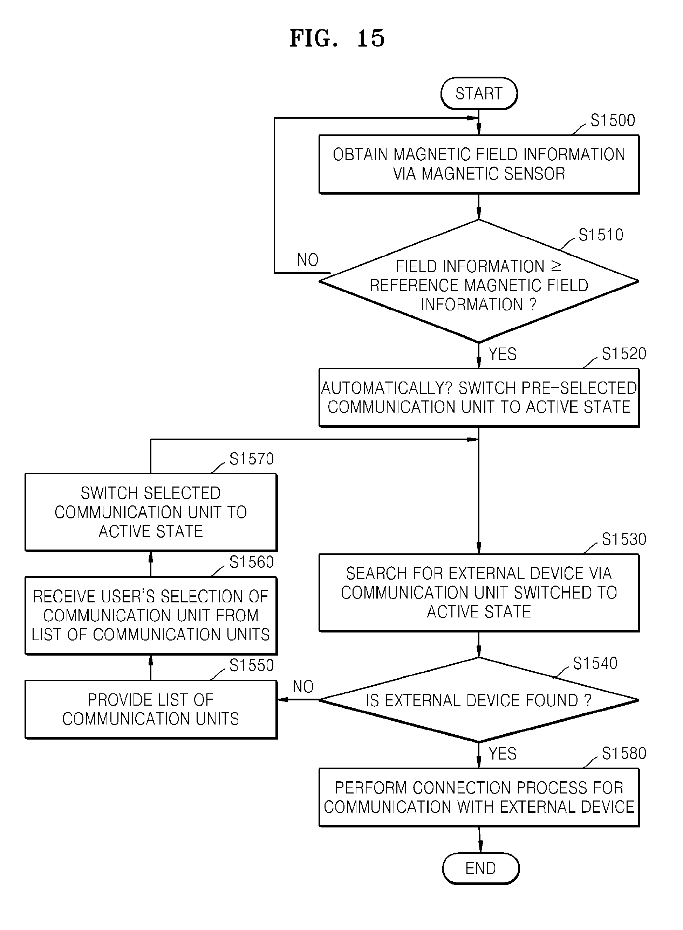

Hereinafter, a method by which the electronic device 100 provides a list of selectable communications units to a user when the external device 200 is not found via a predetermined communication unit, for example, a microphone according to an exemplary embodiment will be described in greater detail with reference to FIG. 15.

FIG. 15 is a flowchart of a method of providing a list of communication units according to an exemplary embodiment.

Operations S1500 and S1510 in FIG. 15 correspond to operations S810 and S820 in FIG. 8, respectively, and thus detailed descriptions thereof are omitted herein.

In operation S1520, when the magnetic field information obtained via the magnetic sensor 121 is higher than or equal to the reference magnetic field information, the electronic device 100 may automatically switch a pre-selected communication unit to an active state. The communication unit switched to the active state may be previously selected by the user, the electronic device 100, or an external server.

In operation S1530, the electronic device 100 may search for the external device 200 via the communication unit switched to the active state. In operation S1540, the electronic device 100 may determine whether the external device 200 is found based on information received through the communication unit.

In operation S1550, when the external device 200 is not found via the communication unit in the active state, the electronic device 100 may provide a list of at least another communication unit. Here, the electronic device 100 may output a message that notifies a failure to find the external device 200 (or a failure to connect with the external device 200) via the pre-selected communication unit on a screen thereof.

In operation S1560, the electronic device 100 may receive a user's selection of one communication unit from the list of communication units. For example, the user may select at least one communication unit for searching for the external device 200 from the list of communication units. Here, the user may select at least one communication unit from the list of communication units by, for example, tapping, swiping, or flicking on a region of a touch screen at which a desired communication unit is displayed.

In operation S1570, the electronic device 100 may switch the selected communication unit to an active state. In operation S1530, the electronic device 100 may search for the external device 200 via the communication unit in the active state. When the electronic device 100 fails to find the external device 200, the electronic device 100 may provide the list of communication units again. For example, the list of communication units may be updated to remove the previously selected communication unit.

That is, when the external device 200 is not found via the communication unit switched to the active state, operations S1550 through S1570 and operation S1530 to S1540 may be repeatedly performed. When the electronic device 100 fails to find the external device 200 through all of the communication units, the electronic device 100 may no longer provide the list of communication units and provide a connection failure notice on the screen thereof.

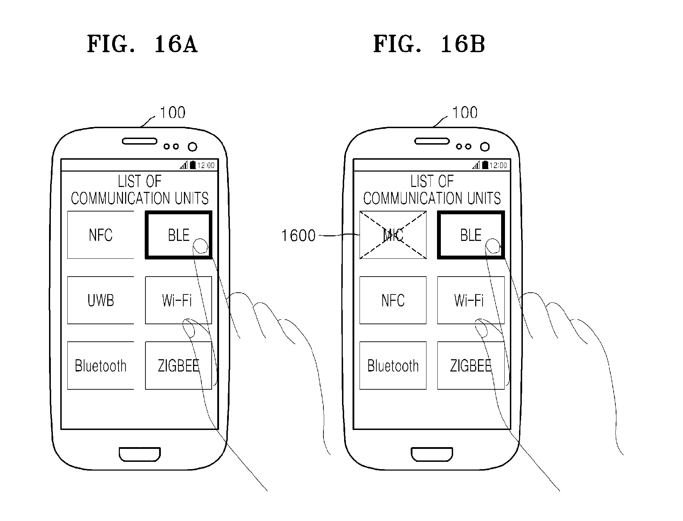

In operation S1580, when the external device 200 is found, the electronic device 100 may perform a process of connecting to the external device 200 for communication with the external device 200. For example, the electronic device 100 may request the external device 200 for a connection or a negotiation for determining a communication method. Hereinafter, an exemplary embodiment where the electronic device 100 provides a list of communication units will be described in greater detail with reference to FIGS. 16A and 16B.

FIGS. 16A and 16B are diagrams illustrating a list of communication units provided on an electronic device according to exemplary embodiments.

In an exemplary embodiment, when the magnetic field information obtained via the magnetic sensor 121 is higher than or equal to the reference magnetic field information, the electronic device 100 may switch a pre-selected communication unit to an active state. For example, a microphone (MIC) 1600 is the pre-selected communication unit and the electronic device 100 may switch the microphone 1600 to an active state to detect a sound signal output from the external device 200. When the sound signal output from the external device 200 is not detected, i.e., the external device 200 is not found via the microphone 1600, the electronic device 100 may provide a list of communication units to allow the user to select another communication unit except the microphone 1600.

As illustrated in FIG. 16A, according to an exemplary embodiment, the electronic device 100 may provide a list of communication units available for searching for the external device 200 except the microphone. For example, the electronic device 100 may provide a list of communication units including an NFC unit, a BLE communication unit, a UWB communication unit, a Wi-Fi communication unit, a Bluetooth communication unit, and a ZigBee communication unit.

When a user selects the BLE communication unit from the list of communication units, the electronic device 100 may switch the BLE communication unit to an active state. The electronic device 100 may search for the external device 200 via the BLE communication unit. When the external device 200 is not found via the BLE communication unit, the electronic device 100 may provide a list of communication units to the user again. In this case, the list of communication units may include the NFC unit, the UWB communication unit, the Wi-Fi communication unit, the Bluetooth communication unit, and the ZigBee communication unit, and exclude the BLE communication unit.

In another exemplary embodiment, the electronic device 100 may display information about the communication unit that has failed to find the external device 200.

As illustrated in FIG. 16B, according to an exemplary embodiment, the electronic device 100 may display a region of a microphone icon (MIC) 1600 in the list of communication units to be crossed out to notify the failure to find the external device 200. In another exemplary embodiment, the electronic device 100 may disable a touch input onto the crossed-out region of the microphone icon (MIC) so that a user may no longer select the microphone icon (MIC).

According to an exemplary embodiment, when the user selects the BLE communication unit in the list of communication units, the electronic device 100 may switch the BLE communication unit to an active state. The electronic device 100 may search for the external device 200 via the BLE communication unit. When the external device 200 is not found via the BLE communication unit, the electronic device 100 may display a region of a BLE communication unit icon (BLE) in the list of communication units crossed out or may disable selecting the BLE communication unit.

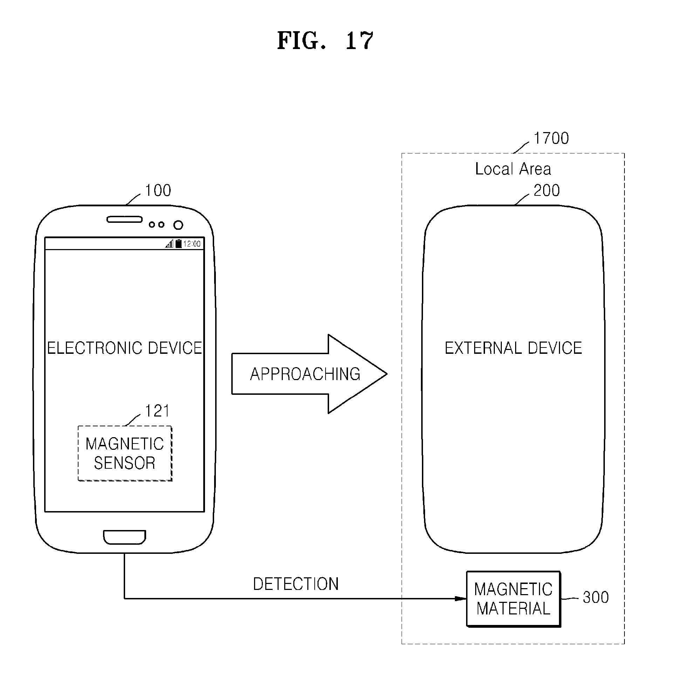

FIG. 17 is a diagram of a communication system according to another exemplary embodiment.

Referring to FIG. 17, a communication system according to another exemplary embodiment includes an electronic device 100, an external device 200, and a magnetic material 300. Unlike the communication system of FIG. 1, in which the magnetic material 300 is included in the external device 200, the magnetic material 300 of FIG. 17 may be separated from the external device 200 and located in a local area of the external device 200.

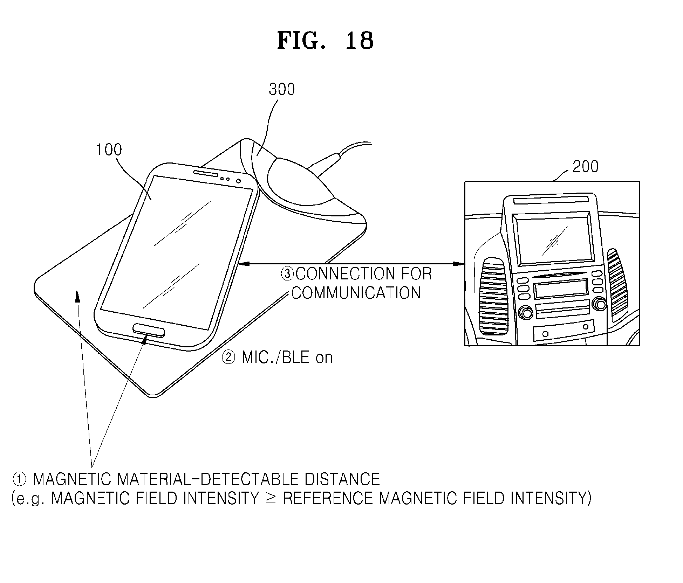

Accordingly, according to an exemplary embodiment, when a user places the electronic device 100 closer to the external device 200 and the local area in proximity to the magnetic material 300, a magnetic sensor 121 of the electronic device 100 may sense the magnetic material 300. The electronic device 100 may switch at least one communication unit thereof in an inactive state to an active state based on magnetic field information obtained via the magnetic sensor 121. In this case, the electronic device 100 may search for the external device 200 via the at least one communication unit switched to the active state. This will be described in greater detail with reference to FIG. 18.

FIG. 18 is a diagram illustrating an exemplary embodiment where a communication unit in an inactivate state is switched to an active state when a wireless charging pad is detected. In the exemplary embodiment of FIG. 18, a portable terminal, a vehicle audio system, and a wireless charging pad are described as examples of the electronic device 100, the external device 200, and the magnetic material 300, respectively.

As illustrated in FIG. 18, a user in a car may put the portable terminal 100 on the wireless charging pad 300. The wireless charging pad 300 may be a magnetic induction pad complying with the Qi (pronounced "chee") standard developed by the Wireless Power Consortium (WPC). The magnetic sensor 121 of the portable terminal 100 may detect an induction coil of the wireless charging pad 300. When the magnetic field intensity, for example, about 190 $\mu$T to about 200 $\mu$T obtained via the magnetic sensor 121 is higher than or equal to a pre-set reference magnetic field intensity, for example, 180 $\mu$T, the portable terminal 100 may switch at least one communication unit to an active state. For example, the portable terminal 100 may switch at least one of a BLE communication unit and a microphone to an active state.

The portable terminal 100 may search for or scan for the vehicle audio system 200 via the at least one communication unit switched to the active state. For example, the portable terminal 100 may detect a sound signal output from the vehicle audio system 200 via the microphone switched to the active state. The portable terminal 100 may also receive an advertising packet from the vehicle audio system via the portable terminal 100.

According to an exemplary embodiment, the electronic device 100 may detect an induction coil of the wireless charging pad 300 via the magnetic sensor 121 during wireless charging, switch a communication unit in an inactive state to an active state, and thus may easily operate with the external device 200. That is, a user in a car may automatically switch, for example, a Bluetooth communication unit of the electronic device 100 into an active state by putting the electronic device 100 on the wireless charging pad 300 without an additional manipulation.

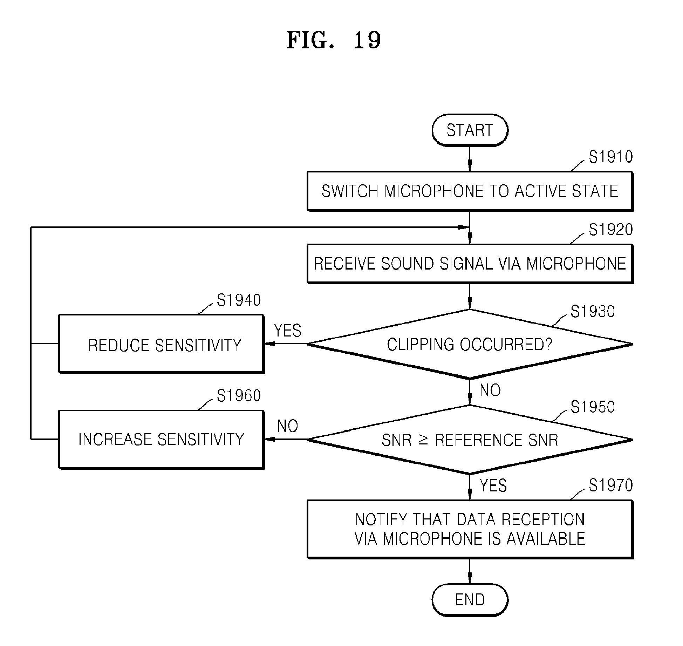

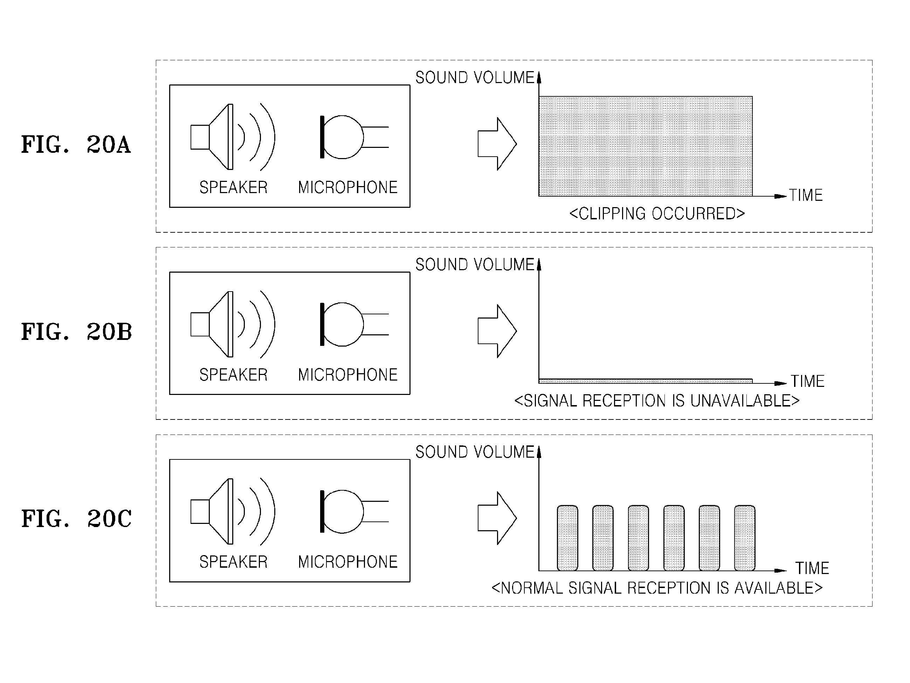

Hereinafter, a method according to an exemplary embodiment in which the electronic device 100 adjusts sensitivity of a microphone switched to an active state to increase a success rate of data transmission and reception via sound communication will be described in greater detail with reference to FIGS. 19 and 20. The sensitivity of the microphone refers to a conversion rate of acoustic energy to electric energy in decibels.

FIG. 19 is a flowchart of a method of adjusting sensitivity of a microphone according to an exemplary embodiment.

In operation S1910, the electronic device 100 may switch a microphone to an active state when the magnetic field information obtained via the magnetic sensor 121 is higher than or equal to the reference magnetic field information. In operation S1920, the electronic device 100 may receive a sound signal via the microphone.

In operation S1930, the electronic device 100 may detect whether clipping has occurred in the received sound signal. Clipping refers to a distortion of sound exceeding an allowed sound volume.

In operation S1940, when clipping has occurred in the received sound signal, the electronic device 100 may lower the sensitivity of the microphone. For example, when a previously set sensitivity of the microphone is -30 dB, the electronic device 100 may adjust the sensitivity of the microphone down a step to -35 dB.

The electronic device 100 may receive a sound signal at an adjusted sensitivity of, for example, -35 dB, and determine again whether clipping has occurred in the received signal.

In operation S1950, the electronic device 100 may obtain signal-to-noise ratio (SNR) information of the received sound signal, and may compare the obtained SNR information with reference SNR information, for example, 15 dB of SNR.

In operation S1960, when an SNR of the received sound signal, for example, 0 dB is less than a reference SNR, for example, 15 dB) the electronic device 100 may increase the sensitivity of the microphone. For example, when a previously set sensitivity of the microphone is 10dB, the electronic device 100 may adjust the sensitivity of the microphone to increase to 15 dB.

The electronic device 100 may receive a sound signal at an adjusted sensitivity of, for example, 15 dB, and determine again whether the SNR of the received sound signal is higher than or equal to the reference SNR of, for example, 15 dB.

In operation S1970, when no clipping occurs in the sound signal received through the microphone and an SNR of the received sound signal is higher than or equal to the reference SNR of, for example, 15 dB, the electronic device 100 may provide a notice that data reception via the microphone is available on a screen thereof.

According to an exemplary embodiment, when clipping occurs in the sound signal received through the microphone or when an SNR of the sound signal is less than the reference SNR of, for example, 15 dB, the electronic device 100 may provide a notice that data reception via the microphone is not available on the screen thereof.

FIGS. 20A, 20B, and 20C are diagrams for describing a state of a sound signal with respect to sensitivity of a microphone according to exemplary embodiments.

As illustrated in FIG. 20A, when a magnitude, for example, 70 dB of a sound signal received via a microphone is higher than or equal to a first threshold level of, for example, 60 dB, clipping may occur in the sound signal received via the microphone. The first threshold level may be a dynamic range of the microphone able to receive a sound signal. For example, the electronic device 100 may lower a predetermined sensitivity of the microphone to receive a sound signal having a magnitude lower than the first threshold level of, for example, 60 dB.

As illustrated in FIG. 20B, when a magnitude, for example, 0 dB of a sound signal received via the microphone is lower than a second threshold level of, for example, 15 dB, the external device 200 may not be able to receive the transmitted sound signal. The second threshold level may be a reference SNR. For example, the electronic device 100 may increase a predetermined sensitivity of the microphone to receive a sound signal having a magnitude greater than or equal to the second threshold level of, for example, 15 dB.

As illustrated in FIG. 20C, when a magnitude of a sound signal received via the microphone is between the first threshold level, for example, 60 dB and the second threshold level, for example, 15dB, a normal sound communication is possible. Accordingly, the electronic device 100 may adjust the sensitivity of the microphone such that no clipping occurs in the sound signal received via the microphone and that an SNR of the sound signal received via the microphone is higher than or equal to the reference SNR, for example, 15 dB. In particular, it may be not easy for a user to adjust the sensitivity of the microphone based on the magnitude of a sound signal. However, the electronic device 100 according to an exemplary embodiment may automatically adjust the sensitivity of the microphone based on the magnitude of the sound signal.

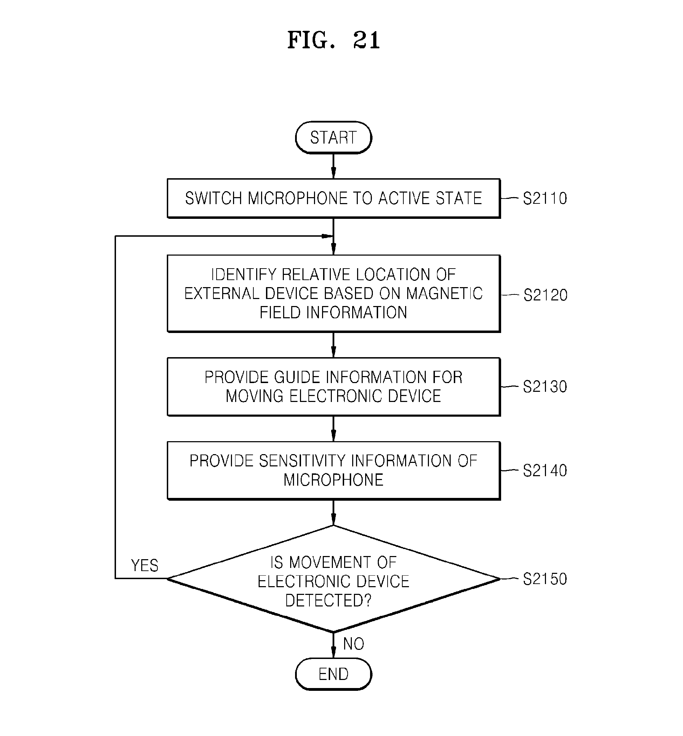

Hereinafter, a method in which the electronic device 10 guides a user to a desired (e.g., optimal) location and direction, by which data transmission and reception efficiency in sound communication may be improved will be described in greater detail with reference to FIGS. 21 to 24.

FIG. 21 is a flowchart of a method by which an electronic device guides a user to a location of an external device or a microphone according to an exemplary embodiment.

In operation S2110, the electronic device 100 may switch a communication unit, e.g., a microphone thereof to an active state when magnetic field information obtained via the magnetic sensor 121 is higher than or equal to reference magnetic field information.

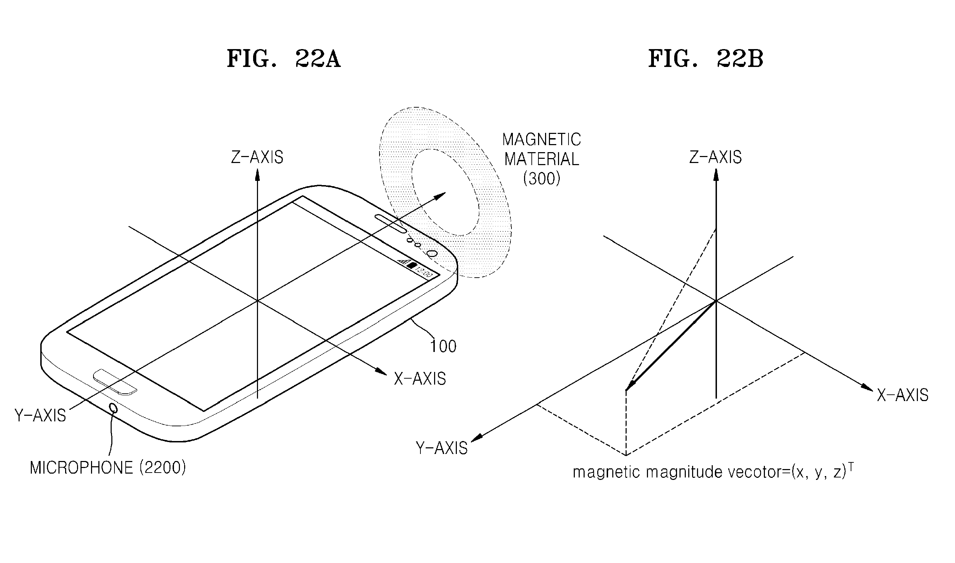

In operation S2120, the electronic device 100 may identify a relative location of the external device 200 with respect to the location of the electronic device 100 based on the magnetic field information obtained via the magnetic sensor 121. For example, the electronic device 100 may identify the relative location of the external device 200 based on triaxial magnetic values measured by the magnetic sensor 121. This will be described later in greater detail with reference to FIG. 22.

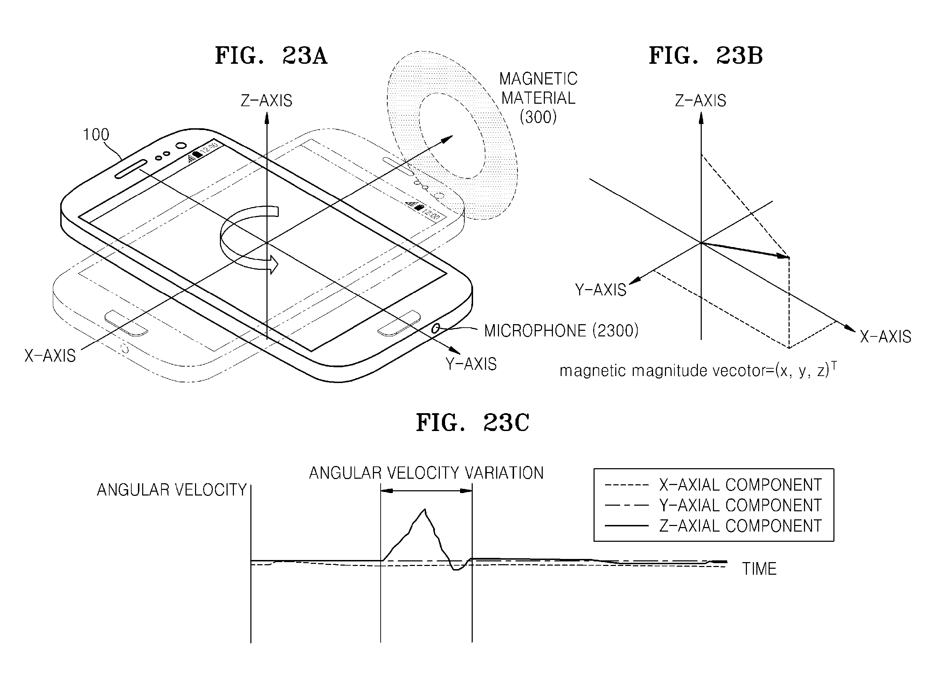

In another exemplary embodiment, when the electronic device 100 is rotated, the electronic device 100 may identify a relative location of the external device 200, further based on angular velocity information obtained by a gyroscope sensor, in addition to the magnetic field information. This will be described later in greater detail with reference to FIG. 23.

In operation S2130, the electronic device 100 may provide guide information that guides a user to move the electronic device 100 such that the microphone installed in the electronic device 100 is towards the external device 200, because the closer that the external device is to the microphone of the electronic device 100, the higher the reception of the sound signal received by the external device 200.

For example, the electronic device 100 may display at least one of information about a location and/or a direction of the external device 200 and information about a location and/or a direction of the microphone on the screen thereof. For example, the electronic device 100 may display the location and/or the direction of the external device 200 or the microphone through a graphical representation such as an image of an arrow, a finger, or a compass. The electronic device 100 may also represent the location and/or the direction of the external device 200 or the location and/or the direction of the microphone in a text or a color. In this case, the user may change the location of the electronic device 100 such that the microphone of the electronic device 100 is moved towards the external device 200 based on the information about the location and/or the direction of the microphone or the external device 200.

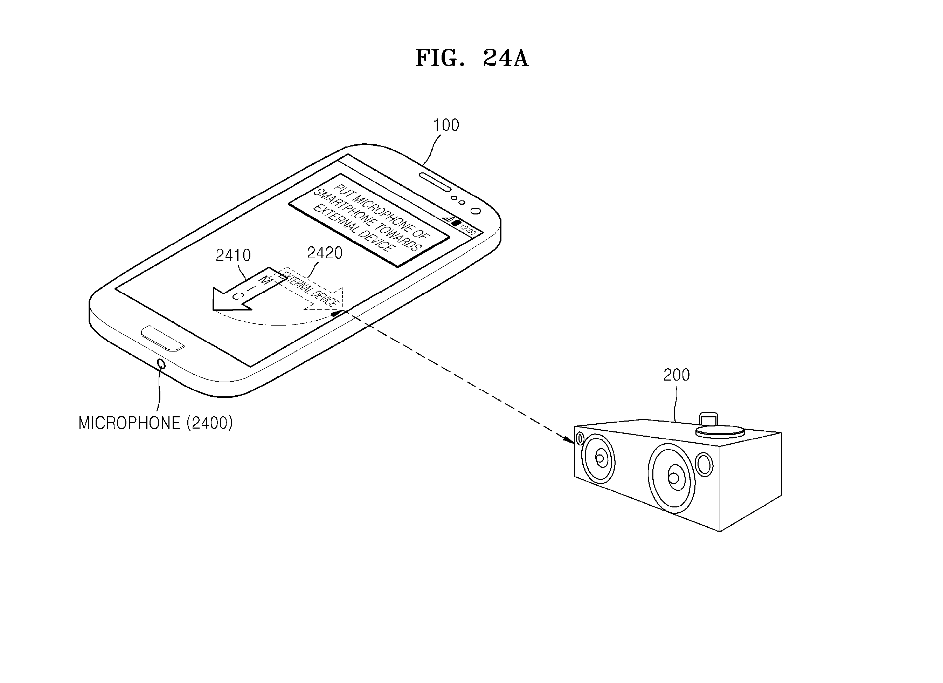

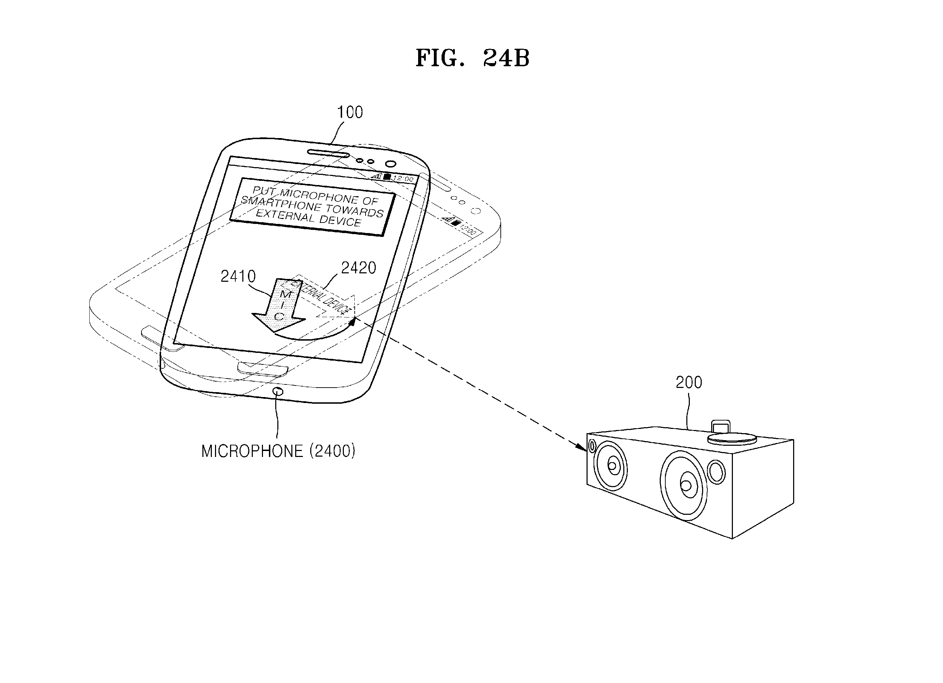

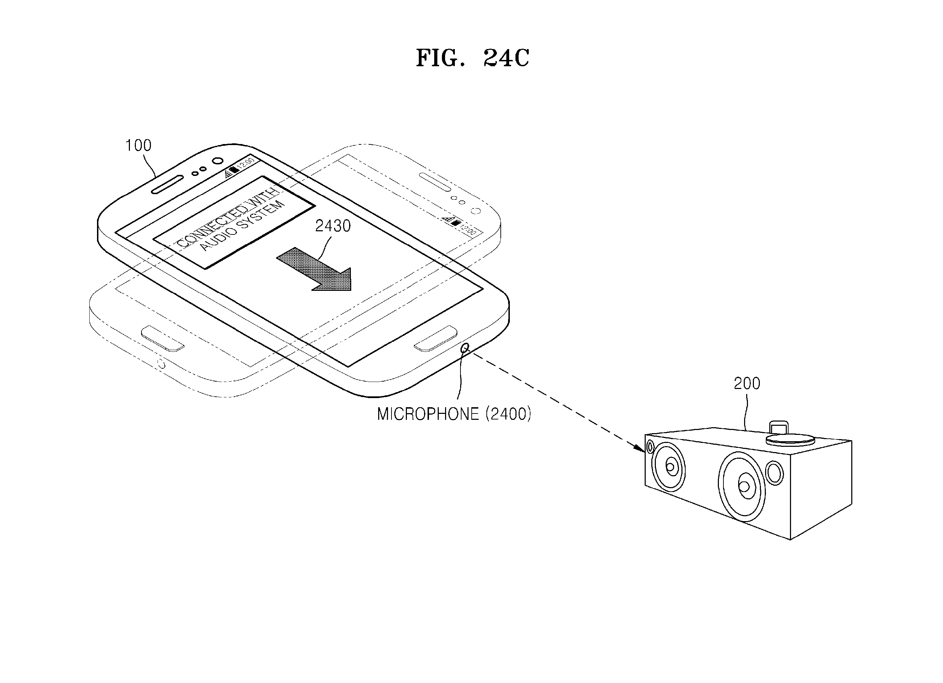

According to another exemplary embodiment, the electronic device 100 may also display a rotation direction of the microphone of the electronic device 100 so that the electronic device 100 is moved toward the external device 200. This will be described later in greater detail with reference to FIG. 24.

In operation S2140, the electronic device 100 may provide sensitivity information of the microphone. For example, the electronic device 100 may represent the sensitivity of the microphone as reception intensity of a signal that is determined by, for example, a number of graphical antennas. The electronic device 100 may also control brightness of the graphical representation displayed on the screen thereof depending on the sensitivity of the microphone.

In operation S2150, the electronic device 100 may detect its own movement. For example, the electronic device 100 may detect its own movement by using a magnetic sensor, a gyroscope sensor, a location sensor, or an acceleration sensor. This will be described below in greater detail with reference to FIG. 23.

In another exemplary embodiment, when a movement of the electronic device 100 is detected, a new relative location of the external device 200 may be identified again. The electronic device 100 may provide guide information for guiding movement of the electronic device 100 to a user based on the new identified new location information of the external device 200. When the sensitivity of the microphone is changed, the electronic device 100 may provide new sensitivity information of the microphone again. That is, operations S2120 to S2140 may be repeatedly performed.

In some other embodiments, an order of operations S2110 through S2150 may be changed or some of the operations may be omitted. Hereinafter, a method by which the electronic device 100 identifies a relative location of the external device 200 based on magnetic field information will be described in greater detail with reference to FIGS. 22A and 22B.

FIGS. 22A and 22B are diagrams of a method by which an electronic device detects a location of an external device based on magnetic field information according to exemplary embodiments.

Referring to FIG. 22, according to an exemplary embodiment, the electronic device 100 may detect a location of the magnetic material 300 based on magnetic values on the X-, Y-, and Z-axes that are measured by the magnetic sensor 121. For example, as illustrated in FIG. 22A, when the magnetic material 300 is in a direction of the Y-axis, the magnetic value on the Y-axis may be largest among the magnetic values on the X-, Y-, and Z-axes. Accordingly, the electronic device 100 may identify that the magnetic material 300 is in the direction of the Y-axis based on the largest magnetic value on the y-axis.

According to another exemplary embodiment, the electronic device 100 may identify a relative location of the magnetic material 300 based on a machine learning algorithm. For example, the electronic device 100 may obtain a vector ($[m1, m2, m3]^T$) relevant to the magnetic field via the magnetic sensor 121, and apply the obtained vector to a machine learning algorithm, thereby determining the location of the magnetic material 300. For example, an SVM method may be used in this case. That is, the electronic device 100 may determine the location of the magnetic material 300 by using a table of correlations between feature vectors obtained via the magnetic sensor 121 and locations of the magnetic material 300.

For example, when the obtained vector is $[x1, y1, z1]^T$, the electronic device 100 may determine that the magnetic material 300 is in a south east direction by using a correlation table. When the obtained vector is $[x2, y3, z2]^T$, the electronic device 100 may determine that the magnetic material 300 is in a south west direction.

As illustrated in FIG. 22, when a microphone 2200 is at a bottom end of the electronic device 100, the user may rotate the electronic device 100 such that the microphone 2200 at the bottom end of the electronic device 100 is moved towards the external device 200 including the magnetic material 300. In this case, the electronic device 100 may detect movement thereof based on magnetic field information obtained by the magnetic sensor 121 of the electronic device 100 and angular velocity information obtained by a gyroscope sensor of the electronic device 100. This now will be described in greater detail with reference to FIG. 23.

FIGS. 23A, 23B and 23C are diagrams for describing a method by which the electronic device 100 detects a location of the external device based on magnetic field information and angular velocity information according to exemplary embodiments.

As illustrated in FIG. 23A, the user may rotate the electronic device 100 such that a microphone 2300 at a bottom end of the electronic device 100 is moved towards the external device (not shown) including the magnetic material 300. In this case, the magnetic sensor 121 may be at a top end of the electronic device 100.

As illustrated in FIG. 23B, when the electronic device 100 is rotated further towards the external device, the magnetic field information obtained by the magnetic sensor 121 at the top end of the electronic device 100 may decrease. In particular, when the electronic device 100 is rotated by 90 degrees, the magnetic value on the y-axis may be reduced, and the magnetic value on the x-axis may be increased. Accordingly, the electronic device 100 may detect the rotation of the electronic device 100.

Not only when the electronic device 100 is rotated but also when the electronic device 100 is moved away from the magnetic material 300, the magnetic value on the y-axis may be reduced. That is, it may be difficult to distinguish whether the electronic device 100 is rotated or whether the electronic device 100 is moved away from the magnetic material 300 only based on reduction in the magnetic field information, for example, the magnetic value on the y-axis obtained by the magnetic sensor.

Accordingly, the electronic device 100 may identify whether the electronic device 100 is rotated or whether the electronic device 100 is moved away from the magnetic material 300 based on angular velocity information obtained by a gyroscope sensor.

For example, as illustrated in FIG. 23C, when the electronic device 100 is rotated on the z-axis, an angular velocity value on the z-axis among other angular velocity values measured by the gyroscope sensor may be changed. Accordingly, the electronic device 100 according to an exemplary embodiment may determine that the electronic device 100 has been rotated when the magnetic value on the y-axis is reduced and the angular velocity value on the z-axis is changed. According to another exemplary embodiment, the electronic device 100 may calculate a rotation radius by integrating variations in rotating angular velocity.

Hereinafter, guiding the user to move the electronic device 100 such that the microphone 2300 of the electronic device 100 is moved towards the external device 200 according to an exemplary embodiment will be described in greater detail with reference to FIGS. 24A, 24B, and 24C.

FIGS. 24A, 24B, and 24C are diagrams illustrating guiding a user to move a location of the microphone 2400 of the electronic device 100 according to exemplary embodiments. In the exemplary embodiments of FIGS. 24A to 24C, the microphone 2400 may be at a bottom end of the electronic device 100, the magnetic sensor 121 may be at a top end of the electronic device 100, and an audio system 200 may be at a right side of the electronic device 100.

Referring to FIG. 24A, when the user places the magnetic sensor 121 of the electronic device 100 closer to the audio system 200, the magnetic sensor 121 of the electronic device 100 may detect the magnetic material 300 in the audio system 200. In this case, when the magnetic field information obtained via the magnetic sensor 121 is higher than or equal to the reference magnetic field information, the electronic device 100 may switch the microphone 2400 to an active state and receive a sound signal via the microphone 2400.

When the microphone 2400 is moved towards the audio system 200, the audio system 200 may more effectively receive a sound signal transmitted from the audio system 200 through the microphone 2400 of the electronic device 100. Accordingly, the electronic device 100 may provide the user with guide information for guiding movement of the electronic device 100 towards the audio system 200.

For example, the electronic device 100 may determine a relative location of the audio system 200 with respect to the electronic device 100 based on the magnetic field information measured by the magnetic sensor 121. As a result of the determination, when a direction in which the audio system 200 is located relative to the electronic device 100 is not aligned with a direction in which the microphone 2400 is located relative to, for example, a center of the electronic device 100, the electronic device 100 may display information about the direction in which the microphone 2400 is located relative to the center of the electronic device 100 and information about the direction in which the audio system 200 is located relative to the electronic device 100 on a screen thereof.

In another exemplary embodiment, the electronic device 100 may display a message, for example, a message "Please move the microphone towards an external device", and a graphical representation, e.g., an arrow representation indicating a direction of the microphone 2400 and the audio system 200. For example, when the microphone 2400 is at a bottom end of the electronic device 100 and the audio system 200 is at the right side of the electronic device 100, the electronic device 100 may display information guiding the user to rotate the electronic device 100 counterclockwise.

As illustrated in FIG. 24B, when a user rotates the electronic device 100 counterclockwise by about 40 degrees, the electronic device 100 may detect the rotation of the electronic device 100 based on the magnetic field information and the angular velocity information. This has already been described above with reference to FIGS. 23A, 23B, and 23C and thus a detailed description thereof is omitted herein.

The electronic device 100 may continuously display information 2410 about a direction of a location of the microphone 2400 relative to the center of the electronic device 100 and information 2420 about a direction of a location of the audio system 200 relative to the center of the electronic device 100 until the relative direction to the location of the microphone 2400 and the relative direction to the location of the audio system 200 are aligned with each other. For example, the information 2410 and the information 2420 may be represented in a graphical representation such as an arrow image.

As illustrated in FIG. 24C, when the user rotates the electronic device 100 counterclockwise by about 95 degrees, the microphone 2400 may be placed towards the audio system 200. In this case, the electronic device 100 according to an exemplary embodiment may display information 2430 indicating that the microphone 2400 is placed towards the audio system 200 on the screen thereof. The electronic device 100 may also display a message, for example, "Successfully connected to the audio system" indicating that the electronic device 100 is ready for data transmission and reception to and/or from the audio system 200.

In another exemplary embodiment, the electronic device 100 according to an exemplary embodiment may display a graphical representation 2410 indicating the direction of the location of the microphone 121 in different tones to represent varying sensitivity of the microphone 2400. For examples, when the graphical representation 2410 indicating the direction of the location of the microphone 121 is darker in an order of the exemplary embodiments of FIG. 24A, FIG. 24B, and FIG. 24C, a user may recognize that the sensitivity of the microphone 2400 increases in the same order.

Hereinafter, a structure of an electronic device according to an exemplary embodiment will be described in greater detail with reference to FIG. 25.

FIG. 25 is a block diagram illustrating a structure of an electronic device 100 according to an embodiment.

Referring to FIG. 25, the electronic device 100 according to an exemplary embodiment may include a communication unit 110, a sensing unit 120, a controller 130, an output unit 140, a user input unit 150, and a memory 160.

These structural elements of the electronic device 100 will be described by focusing on the elements not described with reference to FIG. 1.

The communication unit 110 may include at least one element which enables communication between the electronic device 100 and the external device 200 or between the electronic device 100 and a server (not shown). For example, the communication unit 110 may include a short-range wireless communication unit 111, a mobile communication unit 112, a broadcasting receiving unit 113, a microphone 114, and a camera 115.

The short-range wireless communication unit 111 may include, for example, a Bluetooth communication unit, a BLE communication unit, a near field communication unit (NFC/RFID unit), a WLAN (WiFi) communication unit, a ZigBee communication unit, an IrDA communication unit, a WFD communication unit, or a UWB communication unit, but is not limited thereto.

The mobile communication unit 112 may transmit and receive a wireless signal to and from at least one of a base station, an external terminal, and a server on a mobile communication network. The wireless signal may include a voice call signal, a video call signal, or various forms of data involved in texting or multimedia message transmission and reception.

The broadcasting receiving unit 113 may receive a broadcasting signal and/or broadcasting-related information from outside via a broadcasting channel. The broadcasting channel may include a satellite channel or a terrestrial broadcasting channel. In other exemplary embodiments, the electronic device 100 may not include the broadcasting receiving unit 113.

The microphone 114 may receive an external sound signal and process the same into electrical voice data. For example, the microphone 114 may receive a sound signal transmitted from an external device 200. The sound signal transmitted from the external device 200 may include at least one from among identification information of the external device 200, state information of the external device 200, capability information of the external device 200 about supported communication methods, and information about a preferred communication method of the external device 200, but is not limited thereto. According to another exemplary embodiment, the microphone 114 may transmit processed sound data to the controller 130.

The camera 115 may obtain an image frame of a still image or a moving picture in a video call mode or a shooting mode via an image sensor. An image captured by the image sensor may be processed by a controller 130 or a separate image processing unit (not shown). For example, the camera 115 may detect a 1-dimensional barcode, a 2-dimensional barcode, for example, a quick response (QR) code, a 3-dimentional barcode, a color code, or a gray code that is displayed on a screen of the external device 200.

The communication unit 110 may transmit and receive data to and from the external device 200. For example, when switched to an active state by the controller 130, the communication unit 110 may receive advertising information, for example, identification information of the external device 200, capability information of the external device 200, state information of the external device 200, or information about a preferred communication method of the external device 200, from the external device 200. The communication unit 110 may request the external device 200 for a connection for communication or a negotiation for determining a communication method.

The sensing unit 120 may sense a state of the electronic device 100 or a neighboring state of the electronic device 100 and transmit the sensed information to the controller 130.

The sensing unit 120 may include at least one of a magnetic sensor 121, an acceleration sensor 122, a temperature/humidity sensor 123, an infrared sensor 124, a gyroscope sensor 125, a location sensor, for example, a global positioning system (GPS) 126, an atmospheric sensor 127, a proximity sensor 128, and an illumination sensor 129, but is not limited thereto. The functions of these sensors may be understood by one of ordinary skill in the art and thus detailed descriptions thereof are omitted here.

The controller 130 may control an overall operation of the electronic device 100. That is, the controller 130 may control the communication unit 110, the sensing unit 120, the output unit 140, the user input unit 150, or the memory 160 by, for example, executing programs stored in the memory 160.

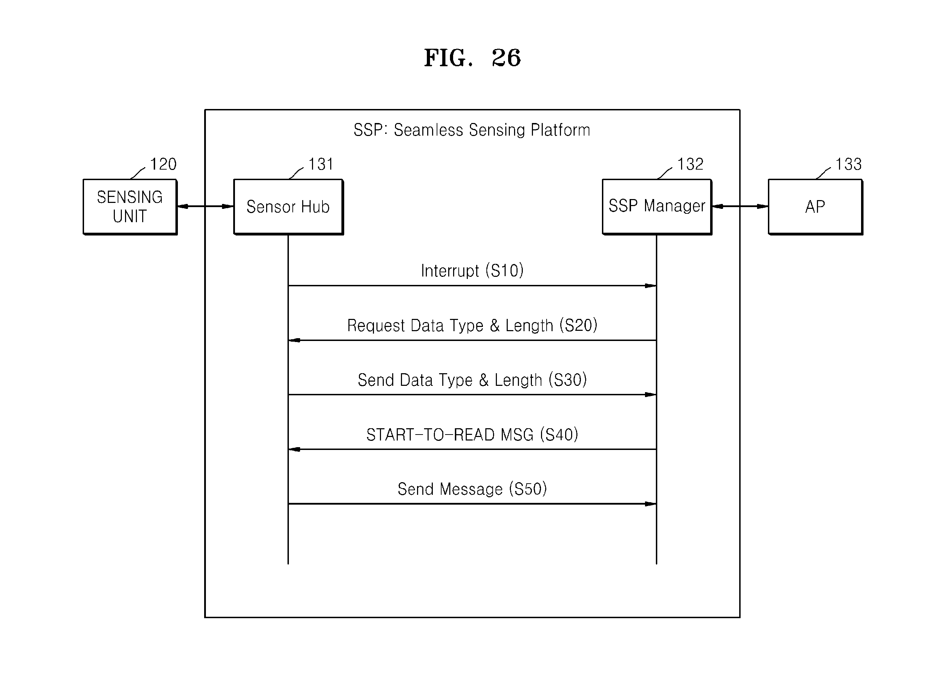

The controller 130 may include a sensor hub 131 of an SSP. According to an exemplary embodiment, the sensor hub 131 may obtain magnetic field information obtained by the magnetic sensor 121. The sensor hub 131 may compare the magnetic field information obtained via the magnetic sensor 121 and reference magnetic field information. When the magnetic field information obtained via the magnetic sensor 121 is higher than or equal to the reference magnetic field information, the sensor hub 131 may activate an application processor (AP) 133 in a sleep mode. That is, the sensor hub 131 may transmit wakeup information for changing the AP 133 from a sleep mode to a wakeup mode. This will be described later in greater detail with reference to FIG. 26.

The controller 130 may include the AP 133 and a communication processor (CP) 135. The AP 133 may control execution of various applications stored in the memory 160. For example, when the magnetic field information obtained via the magnetic sensor 121 is higher than or equal to the reference magnetic field information, the AP 133 may switch the communication unit 110 in an inactive state to an active state.

According to an exemplary embodiment, the AP 133 may switch a plurality of communication units, for example, a Bluetooth communication unit, a short-range wireless communication unit, a WiFi communication unit, a microphone 114, or a BLE communication unit in an inactive state to an active state. For example, the AP 133 may sequentially activate the plurality of communication units in a predetermined order or may simultaneously activate the plurality of communication units.

The controller 130 may receive advertising information from the external device 200 through the communication unit 100 in the active state.

The controller 130 may control sensitivity of the microphone 114. For example, the controller 130 may adjust sensitivity of the microphone 114 based on at least one of information about clipping occurrence in the sound signal received via the microphone 114 and SNR information of the sound signal.

The controller 130 may obtain relative location information of the external device 200 with respect to the electronic device 100 based on the obtained magnetic field information. The controller 130 may determine whether the electronic device 100 has been rotated based on the magnetic field information obtained by the magnetic sensor 121 and the angular velocity information obtained by the gyroscope sensor 125.

The output unit 140 may output an audio signal, a video signal, or a vibration signal. The output unit 140 may include a display unit 141, a sound output unit 142, and a vibration motor 143.

The display unit 141 may display information being processed by the electronic device 100. For example, in a call communication mode, the display unit 141 may display a user interface (UI) or a graphic user interface (GUI) related with call communication. The display unit 141 may display a connection (or search) failure notice when the external device 200 is not found. The display unit 141 may also provide a list of at least one communication unit available for searching for the external device 200 when the external device 200 is not found via a communication unit switched to an active state.

The display unit 141 may also provide an application relevant to the external device 200 on a screen thereof. For example, the display unit 141 may display a control application for controlling the external device 200. The display unit 141 may display information about a connection state with the external device 200, magnetic field information obtained via the magnetic sensor 121, or sensitivity information of the microphone 114 on the screen thereof.

In another exemplary embodiment, the display unit 141 may provide guide information for guiding movement of the microphone 114 based on the relative position information of the external device 200. For example, the display unit 141 may display at least one of location and/or direction information of the external device 200 and location and/or direction information of the microphone 114.

When the display unit 141 has a touch screen structure in which the display unit 141 forms a layered structure with a touch pad, the display unit 141 may serve both as an output device and an input device. The display unit 141 may include at least one of a liquid crystal display, a thin film transistor-liquid crystal display, an organic light-emitting diode display, a flexible display, a 3D display, and an electrophoretic display. The electronic device 100 may include at least two display units 141 depending on an implemented structure of the electronic device 100. The at least two display units 141 may be disposed opposite to each other while being connected with each other via a hinge (not shown) therebetween. When the display unit 141 is implemented as a flexible display, at least two display units 141 may not be hinged.

The sound output unit 142 may output audio data received from the communication unit 110 or stored in the memory 160. The sound output unit 142 may output a sound signal, for example, a call signal reception sound, or a message reception sound corresponding to a function performed by the electronic device 100. The sound output unit 142 may include at least one of a speaker and a buzzer.

The vibration motor 143 may output a vibration signal. For example, the vibration motor 143 may output a vibration signal corresponding to an output of audio data or video data. The vibration motor 143 may also output a vibration signal when there is a touch input on a touch screen.

The user input unit 150 is a unit via which a user inputs data for controlling the electronic device 100. For example, the user input unit 150 may be a keypad, a dome switch, a touch pad (that is, a contact-type electrostatic capacity touch pad, a pressure-type resistive touch screen, an infrared ray detection-type touch pad, a surface ultrasonic wave conduction-type touch pad, an integrated tension measurement-type touch pad, a piezoelectric effect-type touch pad, or the like), a jog wheel, or a jog switch, but is not limited thereto.

The memory 160 may include at least one storage medium from among a flash memory, a hard disk, a multimedia card micro, a card-type memory such as a secure digital (SD) or an extreme digital (XD) memory, a random access memory (RAM), a static random access memory (SRAM), a read-only memory (ROM), an electrically erasable programmable read-only memory (EEPROM), a programmable read-only memory (PROM), a magnetic memory, a magnetic disc, and an optical disc. Additionally, the electronic device 100 may operate a web storage for performing a storage function of the memory 160 on the Internet, or a cloud server.

The programs stored in the memory 160 may be classified into a plurality of modules according to functions. For example, the programs may be classified into a user interface (UI) module 161, a touch screen module 162, a machine learning module 163, and an alarm module 164.

The UI module 161 may provide a specialized UI or GUI for each application that operates with the BLE device 200. The touch screen module 162 may detect a user's touch gesture on a touch screen and transmit information about the touch gesture to the controller 130. The touch screen module 162 may be implemented as a hardware controller.

Various types of sensors may be disposed inside or near the touch screen to detect a touch or a proximity touch on the touch screen. An example of a sensor for detecting a touch on the touch screen may be a tactile sensor. A tactile sensor is a sensor for detecting a contact of a specific object to such a degree that humans may feel it or to a higher degree. The tactile sensor may detect various types of information such as information about a roughness of a contact surface, a hardness of a contact object, or a temperature at a contact point.

Another example of a sensor for detecting a touch on the touch screen is a proximity sensor. A proximity sensor is a sensor for detecting an object which is approaching a predetermined detection surface or a neighboring object based on the strength of an electromagnetic field or an infrared light. Examples of the proximity sensor include a transmission-type photoelectric sensor, a direct reflection-type photoelectric sensor, a mirror reflection-type photoelectric sensor, a high-frequency oscillation proximity sensor, an electrostatic capacity-type proximity sensor, a magnetic-type proximity sensor, and an infrared proximity sensor. Touch gestures of a user may include a tap, a touch and hold, a double-tap, a drag, panning, a flick, a drag-and-drop, and a swipe.

A "tap" is a gesture in which a user touches a screen by using a finger or a touch tool, for example, an electronic pen, and then, immediately lifts the finger or the touch tool off from the screen without dragging on the screen.

A "touch and hold" is a gesture in which a user touches the screen by using the finger or the touch tool, for example, the electronic pen and holds the touch for more than a predetermined period of time, for example, 2 seconds. That is, a difference in time between time points of a touch on and a lift-off from the screen is longer than the predetermined period of time, for example, 2 seconds. When the touch input is held for more than the predetermined period of time, a feedback signal may be visually, aurally, or tactually provided to allow the user to recognize whether the touch input is a tap or a touch and hold. The predetermined period of time may vary according to exemplary embodiments.

A "double tap" is a gesture in which the user touches the screen twice by using the finger or a touch tool which may be a stylus.

A "drag" is a gesture in which the user touches the screen by using the finger or the touch tool and moves the finger or the touch tool to another location in the screen while holding the touch. When the drag is performed, an object displayed on the screen may be moved, or a panning gesture, which is described below, is performed.

A "panning" gesture is a gesture in which the user performs the drag without selecting an object. Since the panning does not select a specific object, a specific object is not moved in a page but the page is moved in the screen or a group of objects is moved in the page.

A "flick" is a gesture in which the user performs the drag at or higher than a predetermined speed, for example, 100 pixels per second, by using the finger or the touch tool. The flick may be distinguished from the drag or the panning based on whether a moving speed of the finger or the touch tool is equal to or higher than the predetermined speed, for example, 100 pixels/s.

A "drag and drop" is a gesture in which the user drags an object to a predetermined place in a screen by using the finger or the touch tool, and then, lifts the finger or touch tool off the screen.

A "pinch" is a gesture in which the user touches the screen with two fingers and moves the two fingers in different directions. The pinch may be a pinch-open gesture for zooming-in to an object or a page, or a pinch-close gesture for zooming-out from the object or the page. A zoom-in or zoom-out value is determined according to a distance between the two fingers.

A "swipe" is a gesture for touching an object in the screen by using the finger or the touch tool and moving the finger or the touch tool in a horizontal or a vertical direction in a certain distance. Moving in a diagonal direction may not be recognized as a swipe event.

The memory 160 may include a voice recognition module (not illustrated) for recognizing a voice of the user by using a voice recognition engine and transmitting the recognized voice signal to the controller 130.

The machine learning module 163 is a learning module by which the electronic device 100 determines whether the magnetic material 200 is near the electronic device 100 based on the magnetic field information obtained by the magnetic sensor 121. In an exemplary embodiment, the machine learning module 163 may use an SVM method. The SVM method is a method in which, when data represented in a white circle and data represented in a black circle are given for learning, the given data are grouped into a white circle group or a black circle group, while focusing on boundary data, for example, a support vector between the two groups of circles.

The alarm module 164 may generate a signal for notifying generation of an event in the electronic device 100. Examples of the event generated in the electronic device 100 may include call signal reception, message reception, key signal input, and schedule notification. The alarm module 164 may output an alarm signal in a form of a video signal via the display unit 141 or in a form of an audio signal via the audio output unit 142. The alarm module 164 may also output an alarm signal in a form of a vibration signal via the vibration motor 143.

The alarm module 164 may provide a snooze function. For example, when a user sets a number of alarm repetitions to, for example, 5 times, or an alarm interval to, for example, 3 minutes, the alarm module 164 may output an alarm signal by the set predetermined number of times, for example, 5 times, or at the set predetermined interval, for example, every 3 minutes.

FIG. 26 is a diagram illustrating a data communication protocol of an SSP according to an exemplary embodiment.

Referring to FIG. 26, the SSP may include a sensor hub 131 and an SSP manager 132. The sensing unit 120 may be connected with the sensor hub 131, and the SSP manager 132 may be in a framework of an application processor (AP) 133.

The sensor hub 131 may receive magnetic field information, for example, magnetic field direction, magnetic field intensity, or magnetism via the sensing unit 120. When the AP 133 in a sleep mode needs to wake up, for example, when magnetic field information obtained via the magnetic sensor 121 is higher than or equal to the reference magnetic field information, the sensor hub 131 may transmit an interrupt signal to notify that there is data to be transmitted to the SSP manager 132 (operation S10).

The SSP manager 132 may transmit, to the sensor hub 131, a signal requesting the sensor hub 131 for information about a type and a length of data to transmit (operation S20). The sensor hub 131 may transmit the information about the type and the length of data to transmit to the SSP manager 132 (operation S30). The SSP manager 132 may transmit a start-to-read message (MSG) to the sensor hub 131 (operation S40). When the sensor hub 131 receives the start-to-read MSG, the sensor hub 131 may process, for example, magnetic field information or information about a communication unit to be switched to an active state into a predetermined packet, and transmit the same to the SSP manager 132 (operation S50). As a result, the AP 133 in the sleep mode may be activated.

The exemplary embodiments may be implemented in the form of executable program commands through a variety of computer means and recordable to computer-readable media. The computer-readable media may include solely or in combination, program commands, data files, and data structures. The program commands recorded to the media may be components specially designed for exemplary embodiments or may be usable by one of ordinary skill in the art of computer software. Computer-readable record media include magnetic media such as a hard disk, a floppy disk, and a magnetic tape, optical media such as CD-ROMs and DVDs, magneto-optical media such as floptical disks and hardware devices such as ROM, RAM, and a flash memory specially designed to store and carry out programs. Program commands include not only machine language code generated by a compiler but also high level code that can be used by an interpreter etc., which is executed by a computer.

As described above, according to the one or more exemplary embodiments, an electronic device 100 may normally maintain a communication unit 110 in an inactive state to reduce the stand-by power consumed by the communication unit 110. The electronic device 100 may automatically switch the communication unit 100 in the inactive state to an active state for communication without a user's manipulation when magnetic field information obtained by a magnetic sensor 121 is higher than or equal to reference magnetic field information.

The foregoing exemplary embodiments are merely exemplary and are not to be construed as limiting. The exemplary embodiments can be readily applied to other types of devices. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A method of controlling a communication unit (110) of an electronic device (100), the method comprising:

    obtaining (S810) magnetic field information via a magnetic sensor;
    comparing (S820) the obtained magnetic field information with reference magnetic field information; and
    switching (S830) the communication unit in an inactive state to an active state based on a result of the comparing, wherein the communication unit is capable of communicating with an external device (200) in the active state.

2. The method of claim 1, wherein the switching comprises switching the communication unit in the inactive state to the active state when the obtained magnetic field information is greater than or equal to the reference magnetic field information.

3. The method of claim 1 or 2, further comprising searching for the external device via the communication unit switched to the active state.

4. The method of claim 3, wherein the searching comprises receiving advertising information from the external device, wherein the advertising information comprises at least one from among identification information, capability information, state information, and information about a preferred communication method of the external device.

5. The method of claim 3 or 4, wherein the communication unit (110) comprises a microphone, and the searching comprises receiving (S1920) a sound signal, including advertising information, output from the external device (200) via the microphone.

6. The method of claim 5, further comprising:

   detecting (S1930) clipping of the sound signal; and
   controlling (S1940) sensitivity of the microphone based on the clipping of the sound signal.

7. The method of claim 5 or 6, further comprising:

   obtaining (S1950) a signal to noise ratio (SNR) of the sound signal; and
   controlling (S1960) sensitivity of the microphone based on the SNR of the sound signal.

8. The method of any of claims 5-7, further comprising:

   obtaining (S2120) relative location information of the external device with respect to the electronic device based on the obtained magnetic field information; and
   providing (S2130) guide information for guiding movement of the microphone based on the relative location information of the external device.

9. The method of claim 8, wherein the providing comprises displaying at least one of location and/or direction information of the external device and location and/or direction information of the microphone on a screen of the electronic device.

10. The method of any of claims 5-9, further comprising providing (S2140) information about sensitivity of the microphone.

11. The method of any of claims 3-10, further comprising providing (S1550) a list of at least another communication unit for searching for the external device when the external device is not found as a result of the searching for the external device via the communication unit switched to the active state.

12. The method of any of claims 3-11, wherein the communication unit further comprises at least one short-range wireless communication unit, and the searching comprises receiving advertising information from the external device via the at least one short-range wireless communication unit.

13. The method of any preceding claim, wherein the switching comprises:

   switching at least one communication unit in the inactive state to the active state based on priority of the at least one communication unit; and
   searching for the external device via the at least one communication unit switched to the active state.

14. The method of any preceding claim, further comprising providing an application related with the external device on a screen of the electronic device when the electronic device is connected with the external device via the communication unit.

15. An electronic device (100) comprising:

   a communication unit (110) operable to communicate with an external device (200);
   a sensing unit (120) comprising a magnetic sensor (121) operable to sense magnetic field information; and
   a controller (130) operable to compare the magnetic field information sensed by the magnetic sensor with reference magnetic field information and to switch the communication unit in an inactive state to an active state based on a result of the comparing.

# FIG. 1

```
                ELECTRONIC DEVICE                              EXTERNAL DEVICE

110 ─── COMMUNICATION UNIT                                              300
                                        ⟨═ COMMUNICATION ═⟩      MAGNETIC
120 ─── SENSING UNIT                                            MATERIAL
121 ─── MAGNETIC SENSOR

130 ─── CONTROLLER
```

100                                                             200

# FIG. 2

```
                    START

    OBTAIN NEIGHBORING MAGNETIC FIELD INFORMATION     ─── S210
               VIA MAGNETIC SENSOR

    COMPARE MAGNETIC FIELD INFORMATION WITH           ─── S220
       REFERENCE MAGNETIC FIELD INFORMATION

    SWITCH COMMUNICATION UNIT IN INACTIVE STATE TO    ─── S230
      ACTIVE STATE BASED ON COMPARISON RESULT

                     END
```

## FIG. 3A

Z-AXIS

X-AXIS

Y-AXIS

magnetic magnitude=$\sqrt{x^2+y^2+z^2}$

## FIG. 3B

B(μT)

40~60μT

TIME

## FIG. 3C

B(μT)

180~200μT

40~60μT

TIME

EP 2 804 429 A1

FIG. 4A

Z-AXIS

X-AXIS

Y-AXIS

$$f(t) = \sqrt{x(t)^2 + y(t)^2 + z(t)^2}$$

$$\Delta f(t) = f(t) - f(t-n)$$

FIG. 4B

FIG. 4C

ΔμT

TIME

0~40ΔμT

ΔμT

150 ΔμT OR HIGHER

TIME

# FIG. 5

< TRIAXIAL MAGNETIC SENSOR VECTOR >

magnetic sensor vector=$(m_1, m_2, m_3)^T$

gyroscope sensor vector=$(g_1, g_2, g_3)^T$

accelerometer sensor vector=$(a_1, a_2, a_3)^T$

< TRIAXIAL GYROSCOPE SENSOR VECTOR >

magnetic sensor based vector,

$$\overline{m} = \begin{bmatrix} m_1 \\ m_2 \\ m_3 \\ g_1 \\ g_2 \\ g_3 \\ a_1 \\ a_2 \\ a_3 \end{bmatrix}$$

<TRIAXIAL ACCELERATION SENSOR VECTOR >

FIG. 6

## FIG. 7A

$$f(x) = \sum_{i=1}^{N} \alpha_i \, y_i \, \overline{x}_i \cdot x + b$$

$\alpha$ : WEIGHTED VALUE     $y$ : TARGET VALUE OF  SUPPORT VECTOR (+1 OR −1)

$x$ : SUPPORT VECTOR       $b$ : BIASED VALUE

## FIG. 7B

FUNCTION
VALUE

0.8 ──────────────────────THRESHOLD

0~0.18

0

TIME

## FIG. 7C

FUNCTION
VALUE

0.85~1

0.8 ──────────────────────THRESHOLD

0

TIME

# FIG. 8

```
                    ┌─────────┐
                    │  START  │
                    └─────────┘
                         │
         ┌───────────────▼────────────────┐
         │ ELECTRONIC DEVICE IS PLACED    │─── S800
         │ CLOSER TO EXTERNAL DEVICE      │
         └───────────────┬────────────────┘
                         │
         ┌───────────────▼────────────────┐
         │ OBTAIN MAGNETIC FIELD INFORMATION │─── S810
         │ VIA MAGNETIC SENSOR            │
         └───────────────┬────────────────┘
                         │
     NO            ◇─────▼─────◇
    ◄──────── MAGNETIC FIELD INFORMATION ≥ ─── S820
              REFERENCE MAGNETIC FIELD
                   INFORMATION ?
                         │ YES
         ┌───────────────▼────────────────┐
         │ SWITCH AT LEAST ONE            │─── S830
         │ COMMUNICATION UNIT TO ACTIVE STATE │
         └───────────────┬────────────────┘
                         │
         ┌───────────────▼────────────────┐
         │ SEARCH FOR EXTERNAL DEVICE     │─── S840
         │ VIA COMMUNICATION UNIT SWITCHED TO │
         │ ACTIVE STATE                   │
         └───────────────┬────────────────┘
                         │
                    ┌────▼────┐
                    │   END   │
                    └─────────┘
```

## FIG. 9A

100

200

LOCK SCREEN

121

MAGNETIC
SENSOR

MAGNETIC
MATERIAL-UNDETECTABLE
AT DISTANCE 'a'

MICROPHONE OFF

## FIG. 9B

B(μT)

THRESHOLD VALUE ———————————— 180μT

40~60μT

T

# FIG. 10A

200

MAGNETIC
MATERIAL-DETECTABLE
AT DISTANCE 'b'

100

LOCK SCREEN

121

MAGNETIC
SENSOR

MICROPHONE ON

# FIG. 10B

B(μT)

185~200uT    Triggering

THRESHOLD VALUE ──────────────────── 180μT

40~60uT

T

## FIG. 11A

NFC ANTENNA

MAGNETIC MATERIAL-UNDETECTABLE AT DISTANCE 'c'

MAGNETIC SENSOR

121

200    100

NFC OFF

## FIG. 11B

B(µT)

THRESHOLD VALUE ——————— 180µT

40~60µT

T

# FIG. 12A

# FIG. 12B

# FIG. 13

START

S1300 — MAGNETIC FIELD INFORMATION VIA MAGNETIC SENSOR

S1310 — MAGNETIC FIELD INFORMATION ≥ REFERENCE MAGNETIC FIELD INFORMATION ?

NO

YES

N=1

S1320 — SWITCH $N^{TH}$ COMMUNICATION UNIT TO ACTIVE STATE

NO

S1360 — N > M ?

YES

S1350 — N=N+1

S1330 — SEARCH FOR EXTERNAL DEVICE BY USING $N^{TH}$ COMMUNICATION UNIT

S1340 — IS EXTERNAL DEVICE FOUND?

NO

YES

S1370 — PROVIDE CONNECTION FAILURE NOTICE

S1380 — PERFORM CONNECTION PROCESS FOR COMMUNICATION WITH EXTERNAL DEVICE

END

FIG. 14

① Mic. on

② Mic. off / BLE on

③ BLE off / NFC on

200

100

LOCK SCREEN

121

MAGNETIC SENSOR

Audio Player — 1400

# FIG. 15

START

OBTAIN MAGNETIC FIELD INFORMATION VIA MAGNETIC SENSOR — S1500

FIELD INFORMATION ≥ REFERENCE MAGNETIC FIELD INFORMATION ? — S1510

NO

YES

AUTOMATICALLY? SWITCH PRE-SELECTED COMMUNICATION UNIT TO ACTIVE STATE — S1520

SWITCH SELECTED COMMUNICATION UNIT TO ACTIVE STATE — S1570

RECEIVE USER'S SELECTION OF COMMUNICATION UNIT FROM LIST OF COMMUNICATION UNITS — S1560

PROVIDE LIST OF COMMUNICATION UNITS — S1550

SEARCH FOR EXTERNAL DEVICE VIA COMMUNICATION UNIT SWITCHED TO ACTIVE STATE — S1530

IS EXTERNAL DEVICE FOUND ? — S1540

NO

YES

PERFORM CONNECTION PROCESS FOR COMMUNICATION WITH EXTERNAL DEVICE — S1580

END

## FIG. 16A

## FIG. 16B

100

LIST OF
COMMUNICATION UNITS

| NFC | BLE |
| UWB | Wi-Fi |
| Bluetooth | ZIGBEE |

100

LIST OF
COMMUNICATION UNITS

1600 —

| NFC | BLE |
| NFC | Wi-Fi |
| Bluetooth | ZIGBEE |

FIG. 17

# FIG. 18

① MAGNETIC MATERIAL-DETECTABLE DISTANCE
(e.g. MAGNETIC FIELD INTENSITY ≥ REFERENCE MAGNETIC FIELD INTENSITY)

FIG. 19

EP 2 804 429 A1

FIG. 20A

SPEAKER   MICROPHONE

SOUND VOLUME

TIME

<CLIPPING OCCURRED>

FIG. 20B

SPEAKER   MICROPHONE

SOUND VOLUME

TIME

<SIGNAL RECEPTION IS UNAVAILABLE>

FIG. 20C

SPEAKER   MICROPHONE

SOUND VOLUME

TIME

<NORMAL SIGNAL RECEPTION IS AVAILABLE>

# FIG. 21

START

SWITCH MICROPHONE TO ACTIVE STATE — S2110

IDENTIFY RELATIVE LOCATION OF EXTERNAL DEVICE BASED ON MAGNETIC FIELD INFORMATION — S2120

PROVIDE GUIDE INFORMATION FOR MOVING ELECTRONIC DEVICE — S2130

PROVIDE SENSITIVITY INFORMATION OF MICROPHONE — S2140

IS MOVEMENT OF ELECTRONIC DEVICE DETECTED? — S2150

YES

NO

END

FIG. 22A

FIG. 22B

EP 2 804 429 A1

## FIG. 23A

## FIG. 23B

magnetic magnitude vecotor=$(x, y, z)^T$

## FIG. 23C

EP 2 804 429 A1

# FIG. 24A

100

PUT MICROPHONE OF
SMARTPHONE TOWARDS
EXTERNAL DEVICE

2410    2420

EXTERNAL DEVICE

MICROPHONE (2400)

200

EP 2 804 429 A1

# FIG. 24B

PUT MICROPHONE OF SMARTPHONE TOWARDS EXTERNAL DEVICE

MICROPHONE (2400)

EP 2 804 429 A1

# FIG. 24C

CONNECTED WITH
AUDIO SYSTEM

100

2430

MICROPHONE (2400)

200

EP 2 804 429 A1

FIG. 25

# FIG. 26

SSP: Seamless Sensing Platform

SENSING UNIT /120

Sensor Hub /131

SSP Manager /132

AP /133

Interrupt (S10)

Request Data Type & Length (S20)

Send Data Type & Length (S30)

START-TO-READ MSG (S40)

Send Message (S50)

EP 2 804 429 A1

Europäisches
Patentamt

European
Patent Office

Office européen
des brevets

## EUROPEAN SEARCH REPORT

Application Number

EP 14 16 6782

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/277304 A1 (HAARTSEN JACOBUS C [NL]) 4 November 2010 (2010-11-04)<br>* abstract *<br>* paragraph [0034] - paragraph [0078] *<br>* claims 1-7; figures 1-5 *<br>----- | 1-15 | INV.<br>H04W52/02 |
| X | EP 2 424 157 A1 (NATIONZ TECHNOLOGIES INC [CN]) 29 February 2012 (2012-02-29)<br>* abstract *<br>* paragraph [0033] - paragraph [0096] *<br>* claim 1; figures 1-11 *<br>----- | 1-15 | |
| X | US 2011/165862 A1 (LI M; LUO W; OUYANG L; SHEN A; WEIXI L; YU Y; ZHU S) 7 July 2011 (2011-07-07)<br>* abstract *<br>* paragraph [0089] - paragraph [0273] *<br>* figures 1-19 *<br>----- | 1-15 | |
| X | US 2005/093374 A1 (CONNORS TIMOTHY [US] ET AL) 5 May 2005 (2005-05-05)<br>* abstract *<br>* paragraph [0016] - paragraph [0042] *<br>* figures 1-5 *<br>----- | 1-15 | TECHNICAL FIELDS SEARCHED (IPC)<br><br>H04W<br>H04M |

The present search report has been drawn up for all claims

| Place of search | Date of completion of the search | Examiner |
|---|---|---|
| The Hague | 17 September 2014 | Tzimeas, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 2 804 429 A1

### ANNEX TO THE EUROPEAN SEARCH REPORT
### ON EUROPEAN PATENT APPLICATION NO.

EP 14 16 6782

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2014

| Patent document cited in search report | | Publication date | Patent family member(s) | | Publication date |
|---|---|---|---|---|---|
| US 2010277304 | A1 | 04-11-2010 | US 2010277304 A1 | | 04-11-2010 |
| | | | WO 2010128352 A1 | | 11-11-2010 |
| EP 2424157 | A1 | 29-02-2012 | AU 2010343862 A1 | | 27-10-2011 |
| | | | CN 102142868 A | | 03-08-2011 |
| | | | CO 6362075 A2 | | 20-01-2012 |
| | | | EP 2424157 A1 | | 29-02-2012 |
| | | | JP 5468144 B2 | | 09-04-2014 |
| | | | JP 2013518482 A | | 20-05-2013 |
| | | | KR 20120119978 A | | 01-11-2012 |
| | | | SG 174512 A1 | | 28-10-2011 |
| | | | WO 2011091622 A1 | | 04-08-2011 |
| US 2011165862 | A1 | 07-07-2011 | NONE | | |
| US 2005093374 | A1 | 05-05-2005 | AT 425510 T | | 15-03-2009 |
| | | | EP 1678665 A1 | | 12-07-2006 |
| | | | US 2005093374 A1 | | 05-05-2005 |
| | | | WO 2005045753 A1 | | 19-05-2005 |

EPO FORM P0459

For more details about this annex : see Official Journal of the European Patent Office, No. 12/82

53

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020130054638